(19) Europäisches Patentamt / European Patent Office / Office européen des brevets

(11) EP 3 272 793 B1

(12) **EUROPEAN PATENT SPECIFICATION**

(45) Date of publication and mention of the grant of the patent:
**10.04.2019 Bulletin 2019/15**

(21) Application number: **16765096.9**

(22) Date of filing: **14.03.2016**

(51) Int Cl.:
***C08J 5/18*** *(2006.01)* ***B32B 27/18*** *(2006.01)*
***B32B 27/36*** *(2006.01)* ***C08K 5/3435*** *(2006.01)*
***C08K 5/3492*** *(2006.01)* *C08L 69/00 (2006.01)*

(86) International application number:
**PCT/JP2016/058619**

(87) International publication number:
**WO 2016/148267 (22.09.2016 Gazette 2016/38)**

(54) **FILM**

FILM

FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2015 JP 2015053584**
**03.07.2015 JP 2015134504**

(43) Date of publication of application:
**24.01.2018 Bulletin 2018/04**

(73) Proprietor: **Teijin Limited**
**Osaka-shi, Osaka 530-0005 (JP)**

(72) Inventors:
- **TAKAHASHI, Naoshi**
  **Osaka-shi**
  **Osaka 5300005 (JP)**
- **MOTOYOSHI, Tetsuya**
  **Osaka-shi**
  **Osaka 5300005 (JP)**
- **IMAZATO, Kenta**
  **Osaka-shi**
  **Osaka 5300005 (JP)**
- **SHIMIZU, Toshiyuki**
  **Osaka-shi**
  **Osaka 5300005 (JP)**
- **MAEKAWA, Shoichi**
  **Osaka-shi**
  **Osaka 5300005 (JP)**
- **YAMANAKA, Katsuhiro**
  **Osaka-shi**
  **Osaka 5300005 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:
**WO-A1-2014/133114**
**WO-A1-2014/133114**
**JP-A- 2009 079 190**
**JP-A- 2012 166 503**
**JP-A- 2013 203 042**
**JP-A- 2014 080 587**
**JP-A- 2014 208 798**
**JP-A- 2014 504 669**
**US-A1- 2012 184 651**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 272 793 B1

**Description**

TECHNICAL FIELD

The present invention relates to a film having high transparency, weather resistance, moist heat resistance, excellent tensile characteristics, a good hue and high surface hardness.

BACKGROUND ART

Heretofore, a material having transparency, low birefringence and a low photoelastic coefficient has been required for films for use in displays. Although polycarbonate resins and acrylic resins have been used as conventional transparent resins, the polycarbonate resins have a problem that visibility lowers due to the occurrence of birefringence and the acrylic resins have a problem with impact strength as they are fragile. Also, when they are used outdoors, the polycarbonate resins yellow due to deterioration by ultraviolet light.

Further, since the polycarbonate resins and the acrylic resins are obtained from oil resources, due to recent concerns about the depletion of oil resources and an increasing amount of carbon dioxide in the air causing global warming, a great deal of attention is now paid to biomass resources whose raw materials do not depend on oil and which materialize "carbon neutral" without increasing the amount of carbon dioxide even when they are burnt. In the field of polymers, biomass plastics produced from the biomass resources are being developed energetically.

A typical example of the biomass plastics is polylactic acid. Since the polylactic acid has relatively high heat resistance and mechanical properties among the biomass plastics, its use is spreading to dishes, packaging materials and miscellaneous goods, and further potential for using it as an industrial material is now under study.

However, for use as an industrial material, the polylactic acid is unsatisfactory in terms of heat resistance and when a molded article thereof is to be obtained by injection molding having high productivity, it is inferior in moldability as its crystallinity is low as a crystalline polymer.

A polycarbonate resin which is produced from a raw material obtained from an ether diol residue able to be produced from sugar is under study as an amorphous polycarbonate resin which is obtained from a biomass resource and has high heat resistance. Studies have been made on use of isosorbide in particular as a monomer to be incorporated into a polycarbonate.

There is proposed a polycarbonate resin having excellent heat resistance and moldability by copolymerizing isosorbide and an aliphatic dihydroxy compound (Patent Document 1, Patent Document 2). It is proposed to use the polycarbonate resin as a surface protective film or a front panel (Patent Document 3, Patent Document 4). It is also proposed to use the polycarbonate resin as a decorative sheet for injection molding (Patent Document 5). It is further proposed to use a bluing agent and an ultraviolet absorbent (Patent Documents 6 and 7). However, there is no description of a film having an improved hue and improved weather resistance.

Patent Document 8 proposes a composition comprising an isosorbide-based polymer and one or more hindered amines. The isosorbide-based polymer is polycarbonate. Colorants such as pigments and/or dyes can be present in an amount up to 0.5 %. In example 1, the commercial hindered amine, HALS 770 is used in an amount of 0.2 5% by weight. In the same example, the commercial UV absorber, UVA 5411, from the benzotriazole class with the chemical name 2-(2'-hydroxy-5'-octylphenyl)-benzotriazole is used in an amount of 0.25 % by weight. The composition can be molded into useful shaped articles by a variety of means such as injection molding, extrusion, rotational molding, blow molding, etc.

(Patent Document 1) WO2004/111106
(Patent Document 2) JP-A 2008-24919
(Patent Document 3) JP-A 2009-79190
(Patent Document 4) JP-A 2009-61762
(Patent Document 5) WO2011/21720
(Patent Document 6) JP-A 2012-214665
(Patent Document 7) JP-A 2012-72392
(Patent Document 8) US 2012/184651 A1

DISCLOSURE OF THE INVENTION

It is an object of the present invention to provide a film having high transparency, weather resistance and moist heat resistance, excellent tensile characteristics, a good hue and high surface hardness.

The inventors of the present invention conducted intensive studies and found that a film comprising a polycarbonate resin (component a) containing a unit derived from isosorbide or the like, a specific ultraviolet absorbent (component b), a coloring agent (component c) and a hindered amine-based optical stabilizer (component d) has high transparency and weather resistance, excellent tensile characteristics, a good hue and high surface hardness. The present invention was accomplished based on this finding.

That is, according to the present invention, the object of the present invention is attained by the following invention.

1. A film comprising:

(a) 100 parts by weight of a polycarbonate resin (component a) containing a carbonate unit (A) represented by the following formula (A) and having a specific viscosity measured from a 20 °C methylene chloride solution of 0.2 to 0.5;

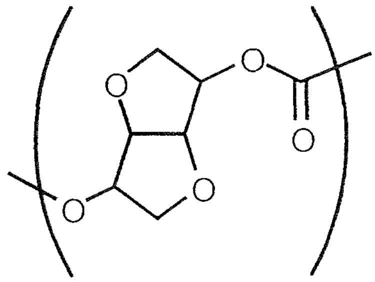

(A)

(b) 0.03 to 2.5 parts by weight of at least one ultraviolet absorbent (component b) selected from the group consisting of an ultraviolet absorbent having a benzotriazole skeleton and an ultraviolet absorbent having a triazine skeleton;
(c) 0.0001 to 0.02 part by weight of a coloring agent (component c); and
(d) 0.01 to 1 part by weight of a hindered amine-based optical stabilizer (component d) wherein the total light transmittance of the film is not less than 80 %.

2. The film in the above paragraph 1, wherein the ultraviolet absorbent (component b) has a maximum absorbance (λmax) at a wavelength of 300 to 360 nm and an ultraviolet absorption at a wavelength of 315 nm measured by a method in this text of not less than 0.3 %.
3. The film in the above paragraph 1, wherein the ultraviolet absorbent (component b) has a maximum absorbance (λmax) at a wavelength of 310 to 330 nm and an ultraviolet absorption at a wavelength of 315 nm measured by a method in this text of not less than 0.8 %.
4. The film in the above paragraph 1, wherein the ultraviolet absorbent (component b) is 2-[4-[4,6-bis([1,1'-biphenyl]-4-yl)-1,3,5-triazin-2-yl]-3-hydroxyphenoxy]-isooctyl ester).
5. The film in the above paragraph 1, wherein the ultraviolet absorbent (component b) is 2,2-methylenebis[6-(2H-benzotriazol-2-yl)-4-(1,1,3,3-tetramethylbutyl)phenol].
6. The film in the above paragraph 1, wherein the hindered amine-based optical stabilizer (component d) is a compound including a structure represented by the following formula (D) .

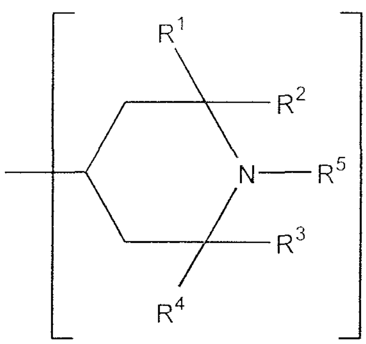

(D)

(In the above formula (D), $R^1$ to $R^4$ may be the same or different and are each an aliphatic hydrocarbon group having 1 to 6 carbon atoms, and $R^5$ is a hydrogen atom or aliphatic hydrocarbon group having 1 to 6 carbon atoms.)
7. The film in the above paragraph 1, wherein the polycarbonate resin (component a) further contains a carbonate unit (B-1) derived from at least one compound selected from the group consisting of an aliphatic diol compound and

an alicyclic diol compound.

8. The film in the above paragraph 7, wherein the aliphatic diol compound is a linear aliphatic diol compound having 2 to 30 carbon atoms.

9. The film in the above paragraph 7, wherein the alicyclic diol compound is 3,9-bis(2-hydroxy-1,1-dimethylethyl)-2,4,8,10-tetraoxaspiro(5.5)undecane.

10. The film in the above paragraph 1, wherein the glass transition temperature of the polycarbonate resin (component a) is 70 to 150°C.

11. The film in the above paragraph 1 which has a tensile elongation at the glass transition temperature (Tg) of not less than 100 %.

12. The film in the above paragraph 1 which has a light transmittance at 315 nm of not more than 3 %.

13. The film in the above paragraph 1 which has a thickness of 30 to 500 μm.

14. A film having an anchor coating layer, a vapor-deposited layer or a hard coat layer on at least one side of the film of the above paragraph 1.

15. A film for decoration including the film of any one of the above paragraphs 1 to 14.

BEST MODE FOR CARRYING OUT THE INVENTION

The present invention will be described in detail hereinunder.

<polycarbonate resin (component a)>

The polycarbonate resin (component a) used in the present invention contains a carbonate unit (A) represented by the above formula (A). The content of the unit (A) is preferably not less than 15 mol%, more preferably not less than 30 mol%, much more preferably not less than 50 mol%, particularly preferably not less than 60 mol% based on the total of all the recurring units.

(unit (A))

The unit (A) is derived from an aliphatic diol having an ether group as shown in the above formula (A). The above formula (A) is a diol having an ether bond which is a material having high heat resistance and high pencil hardness among biomass resources.

Examples of the above formula (A) include recurring units (A1), (A2) and (A3) which are represented by the following formulas and stereoisomeric with one another.

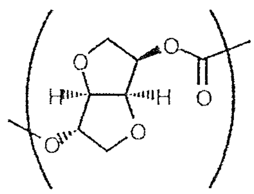

(A 1)

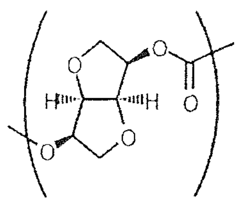

(A 2)

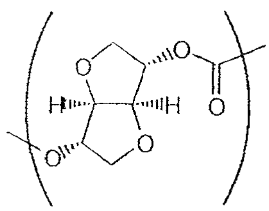

(A 3)

They are sugar-derived ether diols which are materials obtained from the biomass of the natural world and called "recyclable resources". The recurring units (A1), (A2) and (A3) are called isosorbide, isommanide and isoidide, respectively. Isosorbide is obtained by hydrogenating D-glucose obtained from starch and dehydrating the obtained product. The other ether diols are obtained from a similar reaction except for the starting material.

The recurring unit derived from isosorbide (1,4:3,6-dianhydro-D-sorbitol) out of isosorbide, isomannide and isoidide is particularly preferred because it is easily produced and has excellent heat resistance.

The polycarbonate resin of the present invention preferably contains at least one comonomer selected from the following formulas (B-1) and (B-3).

(unit (B-1)

A preferred example of the polycarbonate resin used in the present invention is a copolycarbonate resin which contains the unit (A) and the unit (B-1) and has a total content of the unit (A) and the unit (B-1) of preferably not less than 70 mol%, more preferably not less than 80 mol%, much more preferably not less than 90 mol%, particularly preferably not less than 95 mol% based on the total of all the recurring units.

The unit (B-1) is a carbonate unit derived from at least one compound selected from the group consisting of an aliphatic diol compound and an alicyclic diol compound. The aliphatic diol compound is preferably a linear aliphatic diol compound. A linear aliphatic diol compound having preferably 2 to 30, more preferably 6 to 20, much more preferably 8 to 12 carbon atoms is used. An alicyclic diol compound having preferably 6 to 30, more preferably 6 to 20 carbon atoms is used.

Examples of the linear aliphatic diol compound include ethylene glycol, 1,3-propanediol, 1,4-butanediol, 1,5-pentanediol, neopentyl glycol, 1,6-hexanediol, 1,7-heptanediol, 1,8-octanediol, 1,9-nonanediol, 2-ethyl-1,6-hexanediol, 2,2,4-trimethyl-1,6-hexanediol, 1,10-decanediol, 1,12-dodecanediol, hydrogenated dilinoleyl glycol and hydrogenated dioleyl glycol. Out of these, 1,3-propanediol, 1,4-butanediol, 1,6-hexanediol, 1,9-nonanediol, 1,10-decanediol and 1,12-dodecanediol are preferred.

Examples of the alicyclic diol compound include cyclohexanediols such as 1,2-cyclohexanediol, 1,3-cyclohexanediol, 1,4-cyclohexanediol and 2-methyl-1,4-cyclohexanediol; cyclohexane dimethanols such as 1,2-cyclohexane dimethanol, 1,3-cyclohexane dimethanol and 1,4-cyclohexane dimethanol; norbornane dimethanols such as 2,3-norbornane dimethanol and 2,5-norbornane dimethanol; and tricyclodecane dimethanol, pentacyclopentadecane dimethanol, 1,3-adamantane diol, 2,2-adamantane diol, decalin dimethanol, 2,2,4,4-tetramethyl-1,3-cyclobutanediol and 3,9-bis(2-hydroxy-1,1-dimethylethyl)-2,4,8,10-tetraoxaspiro[5.5]undecane. Out of these, 1,4-cyclohexane dimethanol, tricyclodecane dimethanol and 3,9-bis(2-hydroxy-1,1-dimethylethyl)-2,4,8,10-tetraoxaspiro[5.5]undecane are preferred.

These aliphatic diol compounds and these alicyclic diol compounds may be used alone or in combination of two or more. The diol used in the present invention may be used in combination with an aromatic dihydroxy compound as long as the effect of the present invention is not impaired.

Examples of the aromatic dihydroxy compound include $\alpha,\alpha'$-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenyl sulfide, bisphenol A, 2,2-bis(4-hydroxy-3-methylphenyl)propane (bisphenol C), 2,2-bis(4-hydroxyphenyl)-1,1,1,3,3,3-hexafluoropropane (bisphenol AF) and 1,1-bis(4-hydroxyphenyl)decane.

(composition)

The (A/B-1) molar ratio of the unit (A) to the unit (B-1) is 15/85 to 99/1. When the (A/B-1) molar ratio is 15/85 to 99/1, heat resistance becomes high and moldability becomes satisfactory due to appropriate melt viscosity with the result of excellent impact resistance. The (A/B-1) molar ratio of the unit (A) to the unit (B-1) is preferably 30/70 to 98/2, more preferably 40/60 to 96/4, much more preferably 50/50 to 95/5, particularly preferably 60/40 to 90/10. The molar ratio of each recurring unit is measured and calculated with the proton NMR of the JNM-AL400 of JEOL Ltd.

A terpolymer which contains 60 to 80 mol% of the unit (A), 5 to 25 mol% of a unit derived from 3,9-bis(2-hydroxy-1,1-dimethylethyl)-2,4,8,10-tetraoxaspiro [5.5] undecane (SPG) and the balance consisting of a unit derived from 1,9-nonanediol (ND) may be used. (production method of polycarbonate resin (component a))

The polycarbonate resin (component a) used in the present invention is produced by reaction means known per se for producing an ordinary polycarbonate resin, for example, a method in which a diol component is reacted with a carbonate precursor such as diester carbonate. A brief description is subsequently given of basic means for these production methods.

A transesterification reaction using a diester carbonate as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling

point of the formed alcohol or phenol is generally 120 to 300°C. The reaction is completed while the formed alcohol or phenol is distilled off by setting a reduced pressure from the beginning. An end sealing agent and an antioxidant may be added as required.

The diester carbonate used in the above transesterification reaction is an ester such as an aryl group or aralkyl group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based on 1 mole of the total of the dihydroxy compounds.

To increase the polymerization rate in the melt polymerization method, a polymerization catalyst may be used. The polymerization catalyst is selected from an alkali metal compound, an alkali earth metal compound, a nitrogen-containing compound and a metal compound.

As the above compounds, organic acid salts, inorganic salts, oxides, hydroxides, hydrides, alkoxides and quaternary ammonium hydroxides of an alkali metal or an alkali earth metal are preferably used. These compounds may be used alone or in combination.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, calcium hydrogen carbonate, barium hydrogen carbonate, magnesium hydrogen carbonate, strontium hydrogen carbonate, magnesium diacetate, calcium diacetate, strontium diacetate and barium diacetate. Examples of the basic boron compound include sodium salts, potassium salts, lithium salts, calcium salts, barium salts, magnesium salts and strontium salts of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyl triphenylboron, methyl triphenylboron and butyl triphenylboron.

Examples of the basic phosphorus compound include triethylphosphine, tri-n-propylphosphine, triisopropylphosphine, tri-n-butylphosphine, triphenylphosphine, tributylphosphine and quaternary phosphonium salts.

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably 1 x $10^{-9}$ to 1 x $10^{-2}$ equivalent, more preferably 1 x $10^{-8}$ to 1 x $10^{-5}$ equivalent, much more preferably 1 x $10^{-7}$ to 1 x $10^{-3}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesul fonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

As for the amount of the catalyst deactivator, when at least one polymerization catalyst selected from alkali metal compounds and/or alkali earth metal compounds is used, the catalyst deactivator is used in an amount of preferably 0.5 to 50 moles, more preferably 0.5 to 10 moles, much more preferably 0.8 to 5 moles based on 1 mole of the catalyst.

(unit (B-3))

A preferred example of the polycarbonate resin used in the present invention is a copolycarbonate resin containing the above unit (A) and a unit (B-3) represented by the following formula (B-3) and having a total content of the

unit (A) and the unit (B-3) of not less than 80 mol%, preferably not less than 90 mol%.

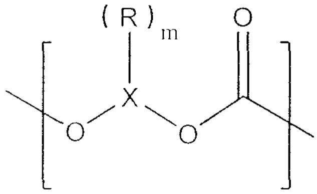

(B − 3)

(In the above formula, X is an alkylene group having 3 to 20 carbon atoms or cycloalkylene group having 3 to 20 carbon atoms, R is an alkyl group having 1 to 20 carbon atoms or cycloalkyl group having 3 to 20 carbon atoms, and m is an integer of 1 to 10.)

The unit (B-3) is a unit derived from an aliphatic diol having a side-chain alkyl group or side-chain cycloalkyl group.

The unit (B-3) has preferably 4 to 12 carbon atoms, more preferably 5 to 10 carbon atoms in total. When the total number of carbon atoms falls within the above range, HDT (deflection temperature under load) of the polycarbonate resin is kept high.

The total number of carbon atoms of X (carbon atoms in the main chain) and carbon atoms of R (carbon atoms in the side chain) of the unit (B-3) satisfies preferably the following expression (i), more preferably the following expression (i-a), much more preferably the following expression (i-b). When the following expression (i) is satisfied, boiling water resistance becomes high and the water absorption can be significantly reduced advantageously.

$$0.3 \leqq \text{(number of carbon atoms in main chain)/number of carbon atoms in side chain)} \leqq 8 \qquad \text{(i)}$$

$$0.4 \leqq \text{(number of carbon atoms in main chain)/number of carbon atoms in side chain)} \leqq 5 \qquad \text{(i-a)}$$

$$0.5 \leqq \text{(number of carbon atoms in main chain)/number of carbon atoms in side chain)} \leqq 2 \qquad \text{(i-b)}$$

(X in unit (B-3))

In the above formula (B-3), X is an alkylene group having 3 to 20 carbon atoms or cycloalkylene group having 3 to 20 carbon atoms.

X is an alkylene group having preferably 3 to 12 carbon atoms, more preferably 3 to 8 carbon atoms, much more preferably 2 to 6 carbon atoms. Examples of the alkylene group include propylene group, butylene group, pentylene group, hexylene group, heptylene group and octylene group.

X is a cycloalkylene group having preferably 3 to 12 carbon atoms, more preferably 3 to 8 carbon atoms, much more preferably 3 to 6 carbon atoms. Examples of the cycloalkylene group include cyclopropylene group, cyclobutylene group, cyclopentylene group, cyclohexylene group, cycloheptylene group and cyclooctylene group.

(R in unit (B-3))

In the formula (B-3), R is an alkyl group having 1 to 20 carbon atoms or cycloalkyl group having 3 to 20 carbon atoms.

R is an alkyl group having preferably 1 to 12 carbon atoms, more preferably 1 to 8 carbon atoms. Examples of the alkyl group include methyl group, ethyl group, propyl group, butyl group, pentyl group, hexyl group, heptyl group and octyl group.

R is a cycloalkyl group having preferably 3 to 12 carbon atoms, more preferably 3 to 8 carbon atoms. Examples of the cycloalkyl group include cyclopropyl group, cyclobutyl group, cyclopentyl group, cyclohexyl group, cycloheptyl group and cyclooctyl group.

("m" in unit (B-3))

In the formula (B-3), "m" is an integer of 1 to 10, preferably 2 to 8, more preferably 2 to 5.

(when X in unit (B-3) is an alkylene group having 3 to 20 carbon atoms)

Preferably, in the unit (B-3), X is an alkylene group having 3 to 20 carbon atoms, R is an alkyl group having 1 to 4 carbon atoms, and "m" is an integer of 2 to 8. More preferably, in the unit (B), X is an alkylene group having 3 to 5 carbon atoms, R is an alkyl group having 1 to 4 carbon atoms, and "m" is an integer of 1 to 2.

-X-{-(R)m}- in the unit (B-3) is preferably a unit (Ba) represented by the following formula.

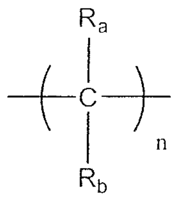

(B a)

"n" is an integer of 2 to 6, preferably 3 to 5. An "n" number of Ra' s are each independently selected from hydrogen atom and alkyl group having 1 to 4 carbon atoms. An "n" number of Rb's are each independently selected from hydrogen atom and alkyl group having 1 to 4 carbon atoms. Preferably, one or two of an "n" number of Ra's and an "n" number of Rb' s are alkyl groups having 1 to 4 carbon atoms, and the other are hydrogen atoms.

-X{-(R)m}- in the unit (B-3) is preferably a 2-n-butyl-2-ethyl-1,3-propanediyl group, 2,4-diethyl-1,5-pentanediyl group or 3-methyl-1,5-pentanediyl group.

(when X in unit (B-3) is a cycloalkylene group having 3 to 20 carbon atoms)

Preferably, in the above formula (B-3), X is a cycloalkylene group having 4 to 5 carbon atoms, R is an alkyl group having 1 to 10 carbon atoms, and "m" is an integer of 3 to 12.

The unit (B-3) is preferably a unit (Bb) represented by the following formula.

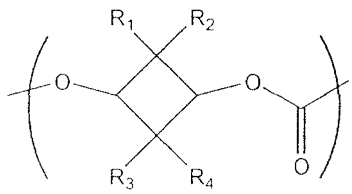

(B b)

$R_1$, $R_2$, $R_3$ and $R_4$ are alkyl groups which may be the same or different, the total number of carbon atoms of $R_1$ to $R_4$ is 4 to 10, and $R_1$ and $R_2$, and $R_3$ and $R_4$ may be bonded together to form a carbon ring. Preferably, $R_1$, $R_2$, $R_3$ and $R_4$ in the unit (Bb) are each independently a methyl group, ethyl group or propyl group.

The unit (B-3) is preferably a unit (Bb-i) represented by the following formula.

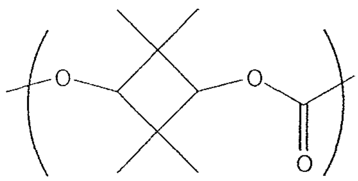

(B b − i)

The unit (B-3) is derived from an aliphatic diol having a side-chain alkyl group or a side-chain cycloalkyl group. Examples of the aliphatic diol having a side-chain alkyl group or a side-chain cycloalkyl group include 1,3-butylene glycol, 2-methyl-1,3-propanediol, neopentyl glycol, 3-methyl-1,5-pentanediol, 2-n-butyl-2-ethyl-1,3-propanediol, 2,2-diethyl-1,3-propanediol, 2,4-diethyl-1,5-pentanediol, 1,2-hexane glycol, 1,2-octyl glycol, 2-ethyl-1,6-hexanediol, 2,3-diisobutyl-1,3-propanediol, 1,12-octadecanediol, 2,2-diisoamyl-1,3-propanediol, 2-methyl-2-propyl-1,3-propanediol, 2-cyclohexyl-1,3-propanediol, 2-methyl-1,4-cyclohexane dimethanol and 2,2,4,4-tetramethyl-1,3-cyclobutanediol.

Out of these, 3-methyl-1,5-pentanediol, 2-n-butyl-2-ethyl-1,3-propanediol, 2,2-diethyl-1,3-propanediol and 2,4-diethyl-1,5-pentanediol are preferred, and 2-n-butyl-2-ethyl-1,3-propanediol and 2,4-diethyl-1,5-pentanediol are particularly preferred. They may be used in combination of two or more.

The (A/B-3) molar ratio of the unit (A) to the unit (B-3) is preferably 50/50 to 95/5, more preferably 60/40 to

93/7, much more preferably 70/30 to 90/10. Within the above range, balance among heat resistance, weather resistance, low water absorption, surface hardness and low-temperature impact characteristics becomes excellent. The (A/B-3) molar ratio can be measured and calculated with the proton NMR of the JNM-AL400 of JEOL Ltd.

A diol compound inducing a unit except for the unit (A) and the unit (B-3) may be any one of the monomer compounds inducing the unit (B-1) and the unit (B-2), and aliphatic diol compounds, alicyclic diol compounds and aromatic dihydroxy compounds except for these monomer compounds. Examples thereof include diol compounds and oxyalkylene glycols such as diethylene glycol, triethylene glycol, tetraethylene glycol and polyethylene glycol described in the pamphlet of WO2004/111106 and the pamphlet of WO2011/021720.

The aliphatic dihydroxy compounds, the alicyclic dihydroxy compounds and the aromatic dihydroxy compounds are the same as those enumerated above.

The copolycarbonate resin containing the unit (A) and the unit (B-3) is produced by reaction means known per se for producing an ordinary polycarbonate resin, for example, a method in which a diol component is reacted with a carbonate precursor such as diester carbonate. The basic means for these production methods is the same as the means for the above copolycarbonate resin containing the unit (A) and the unit (B-1).

(specific viscosity: $\eta_{sp}$)

The specific viscosity ($\eta_{sp}$) of the polycarbonate resin (component a) is 0.2 to 0.5, preferably 0.3 to 0.5, more preferably 0.31 to 0.47, much more preferably 0.32 to 0.45, particularly preferably 0.33 to 0.42, most preferably 0.34 to 0.40. When the specific viscosity of the polycarbonate resin (component a) is lower than 0.2, strength degrades and when the specific viscosity is higher than 0.5, moldability deteriorates.

The specific viscosity as used in the present invention is obtained from a solution prepared by dissolving 0.7 g of the polycarbonate resin in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride, and "t" is the number of seconds required for the dropping of a sample solution]

The measurement of the specific viscosity may be carried out, for example, by the following procedure. The polycarbonate resin (component a) is first dissolved in methylene chloride in an amount which is 20 to 30 times the weight of the polycarbonate resin, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature: Tg)

The glass transition temperature (Tg) of the polycarbonate resin (component a) is preferably 70 to 150°C, more preferably 90 to 140°C, much more preferably 100 to 135°C, particularly preferably 110 to 130°C. When the glass transition temperature (Tg) of the polycarbonate resin is 70°C or higher, the heat resistance of an optical film formed therefrom becomes satisfactory advantageously. When the glass transition temperature (Tg) of the polycarbonate resin is 150°C or lower, the moldability of a film becomes high advantageously. The glass transition temperature (Tg) is measured at a temperature elevation rate of 20 °C/min by using the 2910 DSC of TA Instruments Japan.

(saturated water absorption)

The saturated water absorption of the polycarbonate resin (component a) is preferably not more than 2.5 %, more preferably not more than 2.2 %, much more preferably not more than 2.0 %. When the saturated water absorption is larger than 2.5 %, the deterioration of various physical properties such as a dimensional change and warpage caused by water absorption may become marked.

The saturated water absorption is obtained from the following equation by measuring a weight increase after a pellet is dissolved in methylene chloride and a cast film having a thickness of 200 μm obtained by evaporating methylene chloride is dried at 100°C for 12 hours and immersed in water at 25°C for 72 hours.

$$\text{Saturated water absorption (\%)} = \{(\text{weight of resin after water absorption} - \text{weight of resin before water absorption})/\text{weight of resin before water absorption} \times 100$$

The relationship between the glass transition temperature (Tg°C) and the water absorption (Wa%) of the polycarbonate resin (component a) satisfies preferably the following expression (I), more preferably the following expression (I-a). When the following expression (I) is satisfied, changes in physical properties and deformation in a moist heat environment can be suppressed advantageously as the obtained polycarbonate resin has excellent heat resistance and low water absorption. Although the upper limit of the TW value is not particularly limited, a TW value of not more than 10 suffices.

$$2.5 \leqq \text{TW value} = \text{Tg} \times 0.04 - \text{Wa} \qquad \text{(I)}$$

$$2.6 \leqq \text{TW value} = \text{Tg} \times 0.04 - \text{Wa} \qquad \text{(I-a)}$$

(pencil hardness)

The polycarbonate resin (component a) has a pencil hardness of preferably at least HB. The pencil hardness is preferably at least F, more preferably at least H as the polycarbonate resin is excellent in scratch resistance. The pencil hardness can be enhanced by increasing the contents of the recurring units (B-1) to (B-3) based on the total of all the recurring units. In the present invention, the term "pencil hardness" means such hardness that when the resin of the present invention is rubbed with a pencil having specific pencil hardness, no scratch mark is left, and pencil hardness used in the surface hardness test of a coating film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(photoelastic coefficient)

The photoelastic coefficient of the polycarbonate resin (component a) is preferably not more than 30 x $10^{-12}$ $Pa^{-1}$, more preferably not more than 28 x $10^{-12}$ $Pa^{-1}$, particularly preferably not more than 20 x $10^{-12}$ $Pa^{-1}$. When the photoelastic coefficient is not more than 30 x $10^{-12}$ $Pa^{-1}$, optical strain is hardly produced by stress, whereby the polycarbonate resin is preferred for displays. The photoelastic coefficient can be obtained by preparing a film having a width of 1 cm and a length of 6 cm and measuring the phase difference under no load of this film and the phase difference for light having a wavelength of 550 nm under loads of 1N, 2N and 3N with the M220 spectroscopic ellipsometer of JASCO Corporation to calculate (phase difference) x (film width)/ (load).

<ultraviolet absorbent (component b)>

The film of the present invention comprises an ultraviolet absorbent (component b). The ultraviolet absorbent (component b) is at least one selected from the group consisting of an ultraviolet absorbent having a benzotriazole skeleton and an ultraviolet absorbent having a triazine skeleton. The ultraviolet absorbent having a benzotriazole skeleton and the ultraviolet absorbent having a triazine skeleton may be used in combination.

The content of the ultraviolet absorbent (component b) is 0.03 to 2.5 parts by weight, preferably 0.05 to 2.0 parts by weight, more preferably 0.1 to 1.0 part by weight, much more preferably 0.3 to 0.6 part by weight based on 100 parts by weight of the polycarbonate resin. When the content of the ultraviolet absorbent (component b) is higher than 2.5 parts by weight, the film yellows or a dispersion failure occurs and when the content is lower than 0.03 part by weight, weather resistance becomes unsatisfactory disadvantageously.

Examples of the ultraviolet absorbent having a benzotriazole skeleton include 2,2-methylenebis[6-(2H-benzotriazol-2-yl)-4-(1,1,3,3-tetramethylbutyl)phenol], 2-(2'-hydroxy-5'-methylphenyl)benzotriazole, 2-(2'-hydroxy-5'-tert-butylphenyl)benzotriazole, 2-(2'-hydroxy-5'-tert-octylphenyl)benzotriazole, 2-(2'-hydroxy-3',5'-di-tert-butylphenyl)benzotriazole, 2-(2'-hydroxy-3',5'-di-tert-amylphenyl)benzotriazole, 2-(2'-hydroxy-3'-dodecyl-5'-methylphenyl)benzotriazole, 2-(2'-hydroxy-3',5'-bis($\alpha$,$\alpha$'-dimethylbenzyl)phenyl benzotriazole, 2-[2'-hydroxy-3'-(3",4",5",6"-tetraphthalimidomethyl)-5'-methylphenyl]benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2,2'-methylenebis[4-(1,1,3,3-tetramethylbutyl)-6-(2H-benzotriazol-2-yl)phenol] and condensate of methyl-3-[3-tert-butyl-5-(2H-benzotriazol-2-yl)-4-hydroxyphenylpropionate and polyethylene glycol. They may be used alone or a combination of two or more.

The content of the ultraviolet absorbent having a benzotriazole skeleton is preferably 0.03 to 2.5 parts by weight, more preferably 0.05 to 2.0 parts by weight, much more preferably 0.1 to 1.0 part by weight, particularly preferably 0.3 to 0.6 part by weight based on 100 parts by weight of the polycarbonate resin. When the content of the ultraviolet absorbent having a benzotriazole skeleton is higher than 2.5 parts by weight, the film may yellow or a dispersion failure may occur and when the content is lower than 0.03 part by weight, weather resistance may become unsatisfactory.

Examples of the ultraviolet absorbent having a triazine skeleton include 2[4-[4,6-bis([1,1'-biphenyl]-4-yl)-1,3,5-triazin-2-yl]-3 -hydroxyphenoxy]-isooctyl ester), 2-(4,6-diphenyl-1,3,5-triazin-2-yl)-5-phenol, 2-(4,6-diphenoxy-1,3,5-triazin-2-yl)-5-phenol, 2-[4,6-di(4-methylphenyl)-1,3,5-triazin-2-yl]-5-phenol, 2-(4,6-diphenyl-1,3,5-triazin-2-yl)-5-[(hexyl)oxy]-phenol, 2-(4,6-diphenyl-1,3,5-triazin-2-yl)-5-[2-(2-ethylhexanoyloxy)ethoxy]phenol, 2-ethyl hexanoate=2-[3-hydroxy]-4-(4,6-diphenyl-1,3,5-triazin-2-yl)phenoxy]ethyl, 2-(4,6-(4-biphenyl)-1,3,5-triazin-2-yl)-5-(2-ethylhexyloxy)-phenol and (propanoic acid, 2-[4-[4,6-bis([1,1'-biphenyl]-4-yl)-1,3,5-triazin-2-yl]-3-hydroxyphenoxy]-isooctyl ester). They may be used alone or in combination of two or more.

The content of the triazine-based ultraviolet absorbent is 0.03 to 2.5 parts by weight, preferably 0.05 to 2.0 parts by weight, more preferably 0.1 to 1.0 part by weight based on 100 parts by weight of the polycarbonate resin. When the content of the triazine-based ultraviolet absorbent is higher than 2.5 parts by weight, the yellowing of the film, a dispersion failure, or the reduction of productivity or a poor film appearance caused by the adhesion of a sublimate derived from the ultraviolet absorbent to the die and roll at the time of film molding may occur. When the content is lower than 0.03 part by weight, weather resistance may become unsatisfactory.

Preferably, the ultraviolet absorbent (component b) has a maximum absorbance (λmax) at a wavelength of 300 to 360 nm and an ultraviolet absorption at a wavelength of 315 nm of not less than 0.3 %.

Preferably, the ultraviolet absorbent (component b) has a maximum absorbance (λmax) at a wavelength of 310 to 330 nm and an ultraviolet absorption at a wavelength of 315 nm of not less than 0.8 %.

The maximum absorbance (λmax) is measured with a spectrophotometer (U-3310 of Hitachi, Ltd.) by preparing a methylene chloride solution of the ultraviolet absorbent (10 mg/L) .

(other ultraviolet absorbent)

Another ultraviolet absorbent, for example, benzophenone-based ultraviolet absorbent, cyclic imino-ester-based ultraviolet absorbent or cyanoacrylate-based ultraviolet absorbent may be used in the film of the present invention as long as the characteristic properties of the film are not impaired. The content of the other ultraviolet absorbent is preferably 0.03 to 2.0 parts by weight, more preferably 0.05 to 1.5 parts by weight, much more preferably 0.1 to 1.0 part by weight based on 100 parts by weight of the polycarbonate resin (component a).

<coloring agent (component c)>

The film of the present invention comprises a coloring agent (component c). The coloring agent (component c) erases the yellow tinge of the film based on the polycarbonate resin (component a) and the ultraviolet absorbent (component b). The coloring agent (component c) used in the present invention is an inorganic pigment or an organic pigment or dye such as an organic dye and not particularly limited if it can dye.

Examples of the inorganic pigment include oxide-based pigments such as carbon black, titanium oxide, Chinese white, red iron oxide, chromium oxide, iron black, titanium yellow, zinc-iron-based brown, copper-chromium-based black and copper-iron-based black.

Examples of the organic dye and pigment such as an organic pigment and an organic dye include phthalocyanine-based dyes and pigments; azo-based, thioindigo-based, perynone-based, perylene-based, quinacridone-based, dioxazine-based, isoindolinone-based and quinophthalone-based condensate polycyclic dyes and pigments; and anthraquinone-based, perynone-based, perylene-based, methine-based, quinoline-based, heterocylic and methyl-based dyes and pigments. These coloring agents may be used alone or in combination of two or more.

The coloring agent is contained in an amount of 0.0001 to 0.02 part by weight, preferably 0.0005 to 0.018 part by weight, more preferably 0.001 to 0.017 part by weight, much more preferably 0.0015 to 0.015 part by weight, particularly preferably 0.0001 to 0.005 part by weight based on 100 parts by weight of the polycarbonate resin (component a). When the content of the coloring agent is higher than 0.02 part by weight, transmittance deteriorates and when the content is lower than 0.0001 part by weight, the effect of erasing a yellow tinge becomes unsatisfactory disadvantageously. When the amount of the coloring agent is too large, the absorption of the coloring agent becomes strong, thereby obtaining a dull-colored film having a low luminous transmittance.

(bluing agent)

An example of the coloring agent (component c) is a bluing agent. The bluing agent is used to erase the yellow tinge of a film based on a polymer or an ultraviolet absorbent.

A bluing agent which is used for polycarbonates may be used without any problem. In general, anthraquinone-based dyes are easily acquired and preferred.

Typical examples of the bluing agent include generic name Solvent Violet13 [CA. No (color index No) 60725; trade name: Macrolex Violet B of Bayer AG, Dia Resin Blue G of Mitsubishi Chemical Co., Ltd. and Sumiplast Violet B of Sumitomo Chemical Co., Ltd.], generic name .Solvent Violet31 [CA. No 68210; trade name: Dia Resin Violet D of Mitsubishi Chemical Co., Ltd.], generic name Solvent Violet33 [CA. No 60725; trade name: Dia Resin Blue J of Mitsubishi Chemical Co., Ltd.], generic name Solvent Blue94 [CA. No 61500; trade name: Dia Resin Blue N of Mitsubishi Chemical Co., Ltd.], generic name Solvent Violet36 [CA. No 68210; trade name: Macrolex Violet 3R of Bayer AG], generic name Solvent Blue97 [trade name; Macrolex Blue RR of Bayer AG] and generic name Solvent Blue45 [CA. No 61110; trade name: Tetrasol Blue RLS of Sandoz; trade name: Sumitone Cyanine Blue of Sumitomo Chemical Co., Ltd.].

These bluing agents may be used alone or in combination of two or more. The content of the bluing agent is preferably 0.0001 to 0.02 part by weight, more preferably 0.0005 to 0.018 part by weight, much more preferably 0.001 to 0.017 part by weight, particularly preferably 0.0015 to 0.015 part by weight based on 100 parts by weight of the polycarbonate resin (component a). When the content of the bluing agent is higher than 0.02 part by weight, transmittance deteriorates and when the content is lower than 0.0001 part by weight, the effect of erasing a yellow tinge becomes unsatisfactory disadvantageously.

<hindered amine-based optical stabilizer (component d)>

The film of the present invention comprises a hindered amine-based optical stabilizer (component d). When the hindered amine-based optical stabilizer (component d) is contained, weather resistance becomes satisfactory and a molded article is hardly cracked.

The hindered amine-based optical stabilize (component d) is preferably a compound containing a structure represented by the following formula (D).

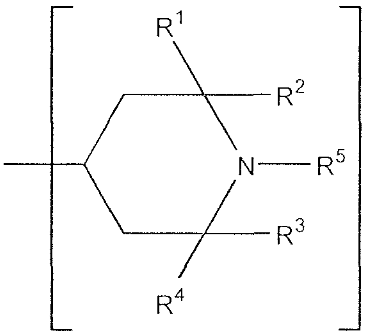

(D)

In the above formula (D), $R^1$ to $R^4$ may be the same or different and each an aliphatic hydrocarbon group having 1 to 6 carbon atoms. $R^5$ is a hydrogen atom or aliphatic hydrocarbon group having 1 to 6 carbon atoms, preferably an aliphatic hydrocarbon group having 1 to 6 carbon atoms. Examples of the aliphatic hydrocarbon group having 1 to 6 carbon atoms include alkyl groups having 1 to 6 carbon atoms. The alkyl groups having 1 to 6 carbon atoms include methyl group, ethyl group and propyl group. Out of these, methyl group is preferred. Examples of the hindered amine-based optical stabilizer (component d) include 1,2,2,6,6-pentamethyl-4-piperidyl methacrylate, bis(2,2,6,6-tetramethyl-1-octyloxy-4-piperidinyl) didecanoate, bis(1,2,2,6,6-pentamethyl-4-piperidinyl)-[[3,5-bis(1,1-dimethylethyl)-4-hydroxyphenyl]methyl]butyl malonate, 2,4-bis[N-butyl-N-(1-cyclohexyloxy-2,2,6,6-tetramethylpiperidin-2-yl)amino]-6-(2-hydroxyethylamine) -1,3,5-triazine, bis(1,2,2,6,6-pentamethyl-4-piperidinyl)sebacate, methyl(1,2,2,6,6-pentamethyl-4-piperidinyl)sebacate, bis(2,2,6,6-tetramethyl-4-piperidyl)carbonate, bis(2,2,6,6-tetramethyl-4-piperidyl)succinate, bis(2,2,6,6-tetramethyl-4-piperidyl)sebacate, 4-benzoyloxy-2,2,6,6-tetramethylpiperidine, 4-octanoyloxy-2,2,6,6-tetramethylpiperidine, bis(2,2,6,6-tetramethyl-4-piperidyl)diphenylmethane-p,p' -dicarbamate, bis(2,2,6,6-tetramethyl-4-piperidyl)benzene-1,3-disulfonate and bis(2,2,6,6-tetramethyl-4-piperidyl)phenyl phosphite. These hindered amine-based optical stabilizers (component d) may be used alone or in combination of two or more. The content of the hindered amine-based optical stabilizer (component d) is preferably 0.01 to 1 part by weight, more preferably 0.02 to 0.5 part by weight, much more preferably 0.03 to 0.4 part by weight, particularly preferably 0.03 to 0.3 part by weight, most preferably 0.05 to 0.2

part by weight based on 100 parts by weight of the polycarbonate resin (component a).

<additives>

The film of the present invention may further comprise additives such as a heat stabilizer (or an antioxidant), plasticizer, polymerization metal inactivating agent, flame retardant, lubricant, antistatic agent, surfactant, antibacterial agent and release agent as required according to purpose. The polycarbonate resin (component a) used in the present invention may be used in combination with another resin as long as the effect of the present invention is not impaired.

<heat stabilizer>

The film of the present invention preferably comprises a heat stabilizer in particular to suppress the reduction of molecular weight and the deterioration of a hue at the time of extrusion/molding. Since the ether diol residue of the unit (A) tends to be deteriorated by heat and oxygen to color the film, a phosphorus-based stabilizer is preferably contained as the heat stabilizer. As the phosphorus-based stabilizer, a pentaerythritol type phosphite compound or a phosphite compound which reacts with a dihydric phenol and has a cyclic structure is preferably used.

Examples of the above pentaerythritol type phosphite compound include distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite and dicyclohexyl pentaerythritol diphosphite. Out of these, distearyl pentaerythritol diphosphite and bis(2,4-di-tert-butylphenyl)pentaerythritol diphosphite are preferred.

Examples of the phosphite compound which reacts with a dihydric phenol and has a cyclic structure include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite, 2,2'-methylenebis(4-methyl-6-tert-butylphenyl)(2-tert-butyl-4-methylphenyl)phosphite, 2,2'-ethylidenebis(4-methyl-6-tert-butylphenyl) (2-tert-butyl-4-methylphenyl)phosphite, 2,2'-methylenebis(4,6-di-t-butylphenyl)octyl phosphite and 6-tert-butyl-4-[3-[(2,4,8,10)-tetra-tert-butyldibenzo[d, f][1,3,2]dioxaphosphepin-6-yl]oxy]propyl]-2-methylphenol

The other phosphorus-based stabilizers include phosphite compounds except for the above compounds, phosphonite compounds and phosphate compounds.

The phosphite compounds include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl)phosphite, tris(di-iso-propylphenyl)phosphite, tris(di-n-butylphenyl)phosphite, tris(2,4-di-tert-butylphenyl)phosphite and tris(2,6-di-tert-butylphenyl)phosphite. Out of these, tris(2,6-di-tert-butylphenyl)phosphite is preferred.

The phosphate compounds include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate. Triphenyl phosphate and trimethyl phosphate are preferred.

The phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Tetrakis(di-tert-butylphenyl)-biphenylene diphosphonites and bis(di-tert-butylphenyl)-phenyl-phenyl phosphonites are preferred, and tetrakis(2,4-di-tert-butylphenyl)-biphenylene diphosphonites and bis(2,4-di-tert-butylphenyl)-phenyl-phenyl phosphonites are more preferred. The phosphonite compound may be and is preferably used in combination with the above phosphite compound having an aryl group substituted by two or more alkyl groups.

The phosphonate compounds include dimethyl benzene phosphonate, diethyl benzene phosphonate and dipropyl benzene phosphonate.

The above phosphorus-based heat stabilizers may be used alone or in combination of two or more.

The above phosphorus-based stabilizers may be used alone or in combination of two or more, and at least a pentaerythritol type phosphite compound or a phosphite compound having a cyclic structure is preferably used in an effective amount. The phosphorus-based stabilizer is used in an amount of preferably 0.001 to 1 part by weight, more preferably 0.01 to 0.5 part by weight, much more preferably 0.01 to 0.3 part by weight based on 100 parts by weight of the polycarbonate resin.

A hindered phenol-based heat stabilizer may also be added as the heat stabilizer to the film of the present

invention in order to suppress the reduction of molecular weight and the deterioration of a hue at the time of extrusion/molding.

The hindered phenol-based stabilizer is not particularly limited if it has an antioxidant function. Examples of the hindered phenol-based stabilizer include n-octadecyl-3-(4'-hydroxy-3' ,5'-di-t-butylphenyl) propionate, tetrakis{methylene-3-(3',5'-di-t-butyl-4-hydroxyphenyl) propionate}methane, distearyl(4-hydroxy-3-methyl-5-t-butylbenzyl)malonate, triethylene glycol-bis{3-(3-t-butyl-5-methyl-4-hydroxyphenyl)propionate}, 1,6-hexanediol-bis{3-(3,5-di-t-butyl-4-hydroxyphenyl) propionate}, pentaerythrityl-tetrakis{3-(3,5-di-t-butyl-4-hydroxyphenyl)propionate}, 2,2-thiodiethylenebis{3-(3,5-di-t-butyl-4-hydroxyphenyl) propionate}, 2,2-thiobis(4-methyl-6-t-butylphenol), 1,3,5-trimethyl-2,4,6-tris(3,5-di-t-butyl-4-hydroxybenzyl)benzene, tris(3,5-di-t-butyl-4-hydroxybenzyl)-isocyanurate, 2,4-bis{(octylthio)methyl}-o-cresol, isooctyl-3-(3,5-di-t-butyl-4-hydroxyphenyl)propionate, 2,5,7,8-tetramethyl-2(4',8',12'-trimethyltridecyl) chroman-6-ol and 3,3',3",5,5',5"-hexa-t-butyl-a,a',a"-(mesitylene-2,4, 6-triyl)tri-p-cresol.

Out of these, n-octadecyl-3-(4'-hydroxy-3' ,5'-di-t-butylphenyl) propionate, pentaerythrityl-tetrakis{3-(3,5-di-t-butyl-4-hydroxyphenyl)propionate}, 3,3',3",5,5',5"-hexa-t-butyl-a,a',a"-(mesitylene-2,4, 6-triyl)tri-p-cresol and 2,2-thiodiethylenebis{3-(3,5-di-t-butyl-4-hydroxyphenyl) propionate} are preferred. These hindered phenol-based stabilizers may be used alone or in combination of two or more.

The hindered phenol-based stabilizer is used in an amount of preferably 0.001 to 1 part by weight, more preferably 0.01 to 0.5 part by weight, much more preferably 0.01 to 0.3 part by weight based on 100 parts by weight of the polycarbonate resin (component a).

<release agent>

The film of the present invention may comprise a release agent in order to further improve its releasability from a mold at the time of melt molding as long as the object of the present invention is not impaired.

The release agent is selected from a higher fatty acid ester of a monohydric or polyhydric alcohol, higher fatty acid, paraffin wax, beeswax, olefin-based wax, olefin-based wax containing a carboxyl group and/or a carboxylic anhydride group, silicone oil and organopolysiloxane.

The higher fatty acid ester is preferably a partial ester or full ester of a monohydric or polyhydric alcohol having 1 to 20 carbon atoms and a saturated fatty acid having 10 to 30 carbon atoms. Examples of the partial ester or full ester of a monohydric or polyhydric alcohol and a saturated fatty acid include monoglyceride stearate, diglyceride stearate, triglyceride stearate, monosorbitate stearate, stearyl stearate, monoglyceride behenate, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate and 2-ethylhexyl stearate. Out of these, monoglyceride stearate, triglyceride stearate, pentaerythritol tetrastearate and behenyl behenate are preferably used.

The higher fatty acid is preferably a saturated fatty acid having 10 to 30 carbon atoms. Examples of the fatty acid include myristic acid, lauric acid, palmitic acid, stearic acid and behenic acid.

These release agents may be used alone or in combination of two or more. The content of the release agent is preferably 0.01 to 5 parts by weight based on 100 parts by weight of the polycarbonate resin.

<film production process>

The film of the present invention may be produced by known processes, for example, solution casting, melt extrusion, thermal pressing and calendering processes. Out of these, a melt extrusion process is particularly preferred as the process for producing the film of the present invention from the viewpoint of productivity.

In the melt extrusion process, preferably, a T die is used to extrude the resin and supply it onto a cooling roll. The resin temperature at this point which is determined from the molecular weight, Tg and melt flow characteristics of the polycarbonate resin is preferably 180 to 350°C, more preferably 200 to 320°C. When the resin temperature is lower than 180°C, viscosity becomes high, whereby the orientation and stress strain of the polymer tend to remain disadvantageously. When the resin temperature is higher than 350°C, problems such as heat deterioration, coloration and the formation of a die line (streak) from the T die tend to occur.

Further, since the polycarbonate resin (component a) used in the present invention has high solubility in an organic solvent, the solution casting process may also be employed. In the case of the solution casting process, methylene chloride, 1,2-dichloroethane, 1,1,2,2-tetrachloroethane, dioxolane and dioxane are preferably used as the solvent. The amount of the residual solvent in the film used in the solution casting process is preferably not more than 2 wt%, more preferably not more than 1 wt%. When the amount of the residual solvent is larger than 2 wt%, the glass transition temperature of the film greatly drops, which is not preferred from the viewpoint of heat resistance.

<film thickness>

The thickness of the film of the present invention is preferably 30 to 500 μm, more preferably 40 to 400 μm, much more preferably 50 to 200 μm.

<light transmittance at 360 nm>

The light transmittance at 360 nm of the film of the present invention is preferably not more than 20 %, more preferably not more than 10 %, much more preferably not more than 5 %, particularly preferably not more than 2 %, most preferably not more than 1 %. When the light transmittance at 360 nm of the film falls within the above range and the film is used outdoors, ultraviolet light does not reach the inside of the film, thereby preventing the deterioration of the internal material advantageously. The light transmittance at 360 nm of the film can be measured by using the U-4100 spectrophotometer of Hitachi, Ltd.

<light transmittance at 315 nm>

The light transmittance at 315 nm of the film of the present invention is preferably not more than 10 %, more preferably not more than 5 %, much more preferably not more than 3 %, particularly preferably not more than 1 %. When the light transmittance at 315 nm of the film falls within the above range and the film is used outdoors, ultraviolet light does not reach the inside of the film, thereby preventing the deterioration of the internal material advantageously. Resistance to accelerated lightfastness testing such as QUV can also be provided. The light transmittance at 315 nm of the film can be measured by using the U-4100 spectrophotometer of Hitachi, Ltd.

<phase difference>

The in-plane phase difference at a wavelength of 550 nm of the film of the present invention is preferably not more than 20 nm, more preferably not more than 15 nm, much more preferably not more than 10 nm. When the in-plane phase difference at a wavelength of 550 nm of the film falls within the above range and the film is used in a display, the penetration of light or the degradation of visibility does not occur advantageously. The in-plane phase difference at a wavelength of 550 nm is obtained by measuring the phase difference at a wavelength of 550 nm of the film with the M-220 spectroellipsometer of JASCO Corporation.

<tensile elongation under heat>

The tensile elongation at the glass transition temperature (Tg) of the film of the present invention is preferably not less than 100 %, more preferably not less than 150 %, particularly preferably not less than 180 %. When the tensile elongation at the time of heating falls within the above range, moldability at the time of secondary processing becomes high advantageously.

The tensile elongation at the glass transition temperature (Tg) is obtained by cutting the film to a size of 110 mm x 15 mm, heating the inside of a tank at Tg of the film to measure tensile fracture elongation by using the AX-G plus autograph of Shimadzu Corporation and averaging 10 measurement values.

<total light transmittance>

The total light transmittance of the film of the present invention is preferably not less than 80 %, more preferably not less than 88 %, much more preferably not less than 90 %, particularly preferably not less than 91 %. When the total light transmittance falls within the above range, visibility becomes excellent advantageously. The total light transmittance of the film can be measured by using the NDH-2000 (D65 light source) of Nippon Denshoku Industries Co., Ltd. The measurement was conducted 5 times to average the measurement values.

<hard coat>

A description is subsequently given of a hard coat layer. In the present invention, various hard coating agents may be used for the hard coating of the film of the present invention.

The hard coating agent which is preferably used in the present invention is a silicone resin-based hard coating agent or an organic resin-based hard coating agent. The hardness of the hard coat layer is not particularly limited but should be higher than the hardness of the polycarbonate.

The silicone resin-based hard coating agent is used to form a cured resin layer having a siloxane bond and is,

for example, a partially hydrolyzed condensate of a compound essentially composed of a compound equivalent to a trifunctional siloxane unit (such as a trialkoxysilane compound), preferably a partially hydrolyzed condensate containing a compound equivalent to a tetrafunctional siloxane unit (such as a tetraalkoxysilane compound), or a partially hydrolyzed condensate obtained by filling metal oxide fine particles such as colloidal silica in these. The silicone resin-based hard coating agent may further contain a bifunctional siloxane unit and a monofunctional siloxane unit. Although the silicone resin-based hard coating agent contains an alcohol produced during a condensation reaction (in the case of a partially hydrolyzed condensate of an alkoxysilane), it may be dissolved or dispersed in any organic solvent, water or a mixture thereof as required. Examples of the organic solvent include lower fatty acid alcohols, polyhydric alcohols, and ethers and esters thereof. A surfactant such as a siloxane-based or alkyl fluoride-based surfactant may be added in order to obtain a hard coat layer having a smooth surface.

Examples of the organic resin-based hard coating agent include melamine resin, urethane resin, alkyd resin, acrylic resin and polyfunctional acrylic resins. The polyfunctional acrylic resins include resins such as polyol acrylate, polyester acrylate, urethane acrylate, epoxy acrylate and phosphazene acrylate. Out of these, an ultraviolet curable hard coating agent is preferred. This hard coating agent more preferably contains a constituent unit in which an ultraviolet absorbing monomer and/or an optically stable monomer are/is copolymerized. A more preferred organic resin-based hard coating agent can form a hard coat layer by the copolymerization of the above monomer(s) with an alkyl (meth)acrylate monomer. This ultraviolet curable hard coating agent is preferred as its treatment is simple and further it can easily include a constituent unit in which an ultraviolet absorbing monomer and/or an optically stable monomer are/is copolymerized so that the light resistance of a molded article thereof can be greatly improved. Commercially available products of the acrylic hard coating agent include the Origiapto Series of Origin Electric Co., Ltd. and the UW Series of Nippon Shokubai Co., Ltd. They may be mixed with a crosslinking agent component before use.

When glass-like hardness is required for a molded article, a silicon resin-based hard coating agent having high long-term weather resistance and relatively high surface hardness is preferred. After a primer layer (first layer) comprising a resin is formed, a top layer (second layer) comprising the silicone resin-based coating agent is preferably formed on the primer layer.

Examples of the resin forming the primer layer (first layer) include urethane resin comprising a block isocyanate component and a polyol component, acrylic resin, polyester resin, epoxy resin, melamine resin, amino resin and polyfunctional acrylic resins such as polyester acrylate, urethane acrylate, epoxy acrylate, phosphazene acrylate, melamine acrylate and amino acrylate. They may be used alone or in combination of two or more. Out of these, a hard coating agent containing an acrylic resin or a polyfunctional acrylic resin in an amount of not less than 50 wt%, preferably not less than 60 wt%, is preferred. A hard coating agent containing an acrylic resin or urethane acrylate is particularly preferred. After the resin is applied while it is unreacted, it may be subjected to a predetermined reaction to become a cured resin, or the reacted resin may be directly applied to form a cured resin layer. In the latter case, the resin is generally dissolved in a solvent to prepare a solution which is then applied and the solvent is removed after that. In the former case, the solvent is generally used as well.

Further, the resin for forming the primer layer for the silicone resin-based hard coating agent may contain additives and additive aids such as a known optical stabilizer and a known ultraviolet absorbent as well as a catalyst, thermo- or photo-polymerization initiator, polymerization inhibitor, silicone defoaming agent, leveling agent, thickener, precipitation inhibitor, sag inhibitor, flame retardant and organic or inorganic pigment or dye for the silicone resin hard coating agents.

The hard coat layer preferably contains an ultraviolet absorbent as it has high durability (especially durability for adhesion) . Further, a more preferred example of the hard coat layer of the present invention is as follows. That is, the hard coat layer is composed of the first layer formed on the surface of the film of the present invention and the second layer formed on the surface of the first layer, wherein

the first layer is composed of a crosslinked acrylic copolymer (acrylic copolymer-I) and an ultraviolet absorbent; the second layer is composed of a crosslinked organosiloxane polymer; the crosslinked acrylic copolymer (acrylic copolymer-I) is a crosslinked acrylic copolymer containing not less than 50 mol% of a recurring unit represented by the following formula (X-1):

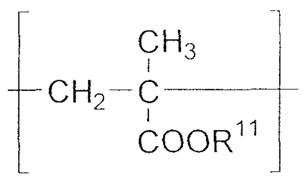

(X-1)

(In the above formula, $R^{11}$ is a methyl group or ethyl group.); 5 to 30 mol% of a recurring unit represented by the following formula (X-2):

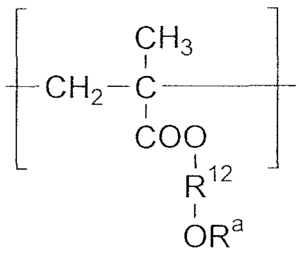

(X-2)

(In the above formula, $R^{12}$ is an alkylene group having 2 to 5 carbon atoms. At least part of Ra in the recurring unit represented by the formula (X-2) is a single bond and the rest is a hydrogen atom. When $R^a$ is a single bond, it is bonded to another recurring unit represented by the formula (X-2) through a urethane bond.);
and 0 to 30 mol% of a recurring unit represented by the formula (X-3) :

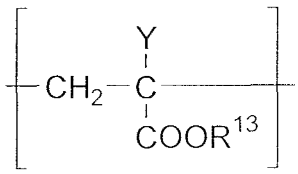

(X-3)

(In the above formula, Y is a hydrogen atom or methyl group, and $R^{13}$ is at least one group selected from the group consisting of a hydrogen atom, alkyl group having 2 to 5 carbon atoms and ultraviolet absorbing residue. A case where Y is a methyl group and $R^{13}$ is a methyl group or ethyl group is excluded.),
the molar ratio of the urethane bond to the total of the recurring units represented by the formulas (X-1) to (X-3) is 4/100 to 30/100; and the crosslinked organosiloxane polymer is a crosslinked organosiloxane polymer containing recurring units represented by the following formulas (p-4) to (p-6) :

$$Q^1Si\left(O\right)_3 \quad (p\text{-}4)$$

$$Q^1Q^2Si\left(O\right)_2 \quad (p\text{-}5)$$

$$Si\left(O\right)_4 \quad (p\text{-}6)$$

(In the above formulas, $Q^1$ and $Q^2$ are each an alkyl group having 1 to 4 carbon atoms, vinyl group or alkyl group having 1 to 3 carbon atoms which is substituted by at least one group selected from the group consisting of methacryloxy group, amino group, glycidoxy group and 3, 4-epoxycyclohexyl group.) and when the total amount of the recurring units is 100 mol%, the amount of the recurring unit of the formula (p-4) is 80 to 100 mol%, the amount of the recurring unit of the formula (p-5) is 0 to 20 mol%, and the amount of the recurring unit of the formula (p-6) is 0 to 20 mol%.

As the coating technique, bar coating, dip coating, flow coating, spray coating, spin coating and roller coating techniques may be suitably selected according to the shape of a base material to be coated. Dip coating, flow coating and spray coating techniques are preferred as they can be easily applied to molded articles having a complicated shape.

<display film>

The film of the present invention can be advantageously used as a display film for liquid crystalline and organic EL display devices such as TV's, computers, mobile phones, tablet type PC monitors and touch panels.

<film for decoration>

The film of the present invention can be advantageously used as a film for decoration. The surface of the film

may be subjected to a pre-treatment such as corona discharge treatment, UV treatment or the application of an anchor coating agent to improve adhesion to a layer when a decorative layer, hard coat layer or adhesive layer is formed. As the anchor coating agent, at least one resin selected from the group consisting of polyester resin, acrylic resin, acryl-modified polyester resin, polyurethane resin, polysiloxane and epoxy resin is preferably used.

In the decorative film, a decorative layer is formed on at least one side of the film for decoration. The decorative layer used in the present invention may take various forms. Examples of the decorative layer include a print layer and a vapor-deposited layer to be formed directly on the film, a colored resin layer to be formed on the film, and a layer which is a film decorated by printing or vapor deposition, and the decorative layer is not particularly limited. The film of the present invention preferably includes an anchor coat layer to improve adhesion to the decorative layer.

The binder resin material of the print layer which is a kind of the decorative layer is preferably a polyurethane-based resin, vinyl-based resin, polyamide-based resin, polyester-based resin, acrylic resin, polyvinyl acetal-based resin, polyester urethane-based resin, cellulose ester-based resin, alkyd-based resin or thermoplastic elastomer-based resin, particularly preferably a resin which can form a soft coating film. Color ink containing a suitable color pigment or dye as a coloring agent is preferably contained in the binder resin.

As the method of forming a print layer, offset printing, gravure printing or screen printing is preferably used. When multi-color printing or gradation color is required, offset printing or gravure printing is preferred. In the case of monochrome, gravure coating, roll coating or comma coating may be employed. According to drawing pattern, a printing method for forming a print layer on the entire surface of a film or a printing method for forming a print layer partially may be used.

The material of the vapor-deposited layer which is a kind of the decorative layer is preferably a metal such as aluminum, silicon, zinc, magnesium, copper, chromium or nickel chromium. From the viewpoints of design and cost, aluminum is more preferred but an alloy of two or more metal components may be used. To form a metal thin film by vapor deposition, an ordinary vacuum deposition method may be used but a method for activating an evaporated material by ion plating, sputtering or plasma may also be used. A chemical vapor deposition method (so-called "CVD method") may be used as the vapor deposition method in a broad sense. As an evaporation source for these methods, a resistance heating type board system, radiation or high-frequency crucible system or electronic beam heating system may be used but the present invention is not limited to these.

When the method for forming the colored resin layer on the film as a kind of the decorative layer is employed, a resin colored with a dye, organic pigment or inorganic pigment as a coloring agent is formed by a coating method or extrusion lamination method but the present invention is not limited to these.

When a print layer is formed as the decorative layer, the thickness of the decorative layer is not limited as long as the effect of the present invention is not inhibited but preferably 0.01 to 100 μm from the viewpoint of moldability.

When a vapor-deposited layer is formed as the decorative layer, the thickness of the decorative layer is not limited as long as the effect of the present invention is not inhibited but preferably 0.01 to 100 μm from the viewpoint of moldability. When a resin layer is formed as the decorative layer, the thickness of the decorative layer is not limited as long as the effect of the present invention is not inhibited but preferably 0.01 to 100 μm from the viewpoint of moldability.

Even when a layer except for a print layer, vapor-deposited layer and resin layer is used as the decorative layer, the thickness of the decorative layer is not limited as long as the effect of the present invention is not inhibited but preferably 0.01 to 100 μm from the viewpoint of moldability.

A film having an anchor coat layer, vapor-deposited layer or hard coat layer on at least one side of the film of the present invention is preferred.

## EXAMPLES

### Examples 1 to 11, Comparative Examples 1 and 2

The following examples are provided for the purpose of further illustrating the present invention but are in no way to be taken as limiting. "Parts" in these examples means "parts by weight". Resins and evaluation methods used in the examples are given below.

### 1. Polymer composition ratio (NMR)

Each of the recurring units was measured with the proton NMR of the JNM-AL400 of JEOL Ltd. to calculate the polymer composition ratio (molar ratio).

### 2. Specific viscosity measurement

This was obtained from a solution prepared by dissolving 0.7 g of the polycarbonate resin in 100 ml of methylene

chloride at 20°C by using an Ostwald viscometer.

$$\text{Specific viscosity } (\eta_{sp}) = (t - t_0)/t_0$$

["$t_0$" is the number of seconds required for the dropping of methylene chloride, and "t" is the number of seconds required for the dropping of a sample solution]

3. Glass transition temperature (Tg)

This was measured by using 8 mg of the polycarbonate resin at a temperature elevation rate of 20°C/min in a nitrogen atmosphere (nitrogen flow rate: 40 ml/min) with the DSC-2910 thermal analyzing system of TA Instruments in accordance with JIS K7121.

4. Water absorption (Wa)

A cast film having a thickness of 200 μm obtained by evaporating methylene chloride after a pellet was dissolved in methylene chloride was dried at 100°C for 12 hours and immersed in 25°C water for 72 hours to measure its weight increase so as to obtain its water absorption from the following equation.

$$\text{Water absorption (\%)} = \{(\text{weight of resin after water absorption} - \text{weight of resin before water absorption})/\text{weight of resin before water absorption}\} \times 100$$

5. TW value

The TW value was obtained from the following equation.

$$\text{TW value} = \text{glass transition temperature (Tg)} \times 0.04 - \text{water absorption (Wa)}$$

6. Pencil hardness

A pellet was molded into a 2 mm-thick rectangular plate at a cylinder temperature of 250°C, a mold temperature of 80°C and a molding cycle of 1 minute by using the J85-ELIII injection molding machine of The Japan Steel Works, Ltd. (JSW) to measure the pencil hardness of the molded test piece by the JIS K5600 base map plate test method.

7. Hue

The hue of a 75 μm-thick film obtained in each Example was measured with a C light source by using the U-3000 spectrophotometer of Hitachi, Ltd.

8. Tensile elongation under heat

The film obtained in each Example was cut to a size of 110 mm x 15 mm, and the inside of a tank was heated at Tg of the film to measure the tensile fracture elongation of the film by using the AX-G plus autograph of Shimadzu Corporation and average 10 measurement values.

9. Transmittance (360 nm)

The light transmittance at 360 nm of the film was measured by using the U-4100 spectrophotometer of Hitachi, Ltd.

10. Weather discoloration

An irradiation treatment was carried out on the square surface of an injection molded flat plate (60 mm in width x 60 mm in length x 3 mm in thickness) at a black panel temperature of 63°C and a relative humidity of 50 % by irradiation and surface spray (rainfall) using the S80 sunshine weatherometer of Suga Test Instruments Co., Ltd. and setting discharge voltage to 50 V and discharge current to 60 A with a sunshine carbon arc (4 pairs of ultra long-life carbons) light source for 1,000 hours in accordance with JIS B7753. The surface spray (rainfall) time was 12 minutes/1 hour. An A-type glass filter was used. The color difference ΔE of the test piece before and after the test was measured by using the SE-2000 spectroscopic color difference meter of Nippon Denshoku Industries Co., Ltd. As ΔE becomes smaller, discoloration becomes smaller.

Example 1

<production of polycarbonate resin>

441 parts of isosorbide (to be abbreviated as ISS hereinafter), 66 parts of 1,9-nonanediol (to be abbreviated as ND hereinafter), 750 parts of diphenyl carbonate (to be abbreviated as DPC hereinafter), and 0.8 x $10^{-2}$ part of tetramethylammonium hydroxide and 0.6 x $10^{-4}$ part of sodium hydroxide as catalysts were heated at 180°C in a nitrogen atmosphere to be molten. Thereafter, the degree of evacuation was adjusted to 13.4 kPa over 30 minutes. After the temperature was raised up to 240°C at a rate of 60°C/hr and maintained at that temperature for 10 minutes, the degree of evacuation was set to 133 Pa or less over 1 hour. A reaction was carried out under agitation for 6 hours in total, nitrogen was discharged from the bottom of a reaction tank under increased pressure, and the obtained product was cut with a pelletizer while it was cooled in a water tank to obtain a pellet. The specific viscosity of the pellet was measured.

(production of film)

Then, the obtained pellet was dried at 90°C for 12 hours with a hot air circulation drier. 0.3 part by weight of 2,2-methylenebis[6-(2H-benzotriazol-2-yl)-4-(1,1,3,3-tetramethylbutyl)phenol] which is a benzotriazole type ultraviolet absorbent as the ultraviolet absorbent (component b), 0.1 part by weight of ADK STAB LA-77Y (of ADEKA Corporation) which is a secondary amine compound as the hindered amine-based optical stabilizer (component d), 0.1 part by weight of Irgafos 168 (manufactured by BASF; tris(2,6-di-tert-butylphenyl)phosphite) which is a phosphorus-based stabilizer as an antioxidant and 0.0015 part by weight of Macrolex Blue RR which is a bluing agent (component c) were uniformly mixed with 100 parts by weight of the obtained pellet, and the resulting mixture was injected into an extruder to produce a resin composition.

A vented double-screw extruder having a diameter of 30 mm (TEX30α-35BW-3V of The Nippon Steel Works, Ltd.) was used as the extruder. As extrusion conditions, the discharge rate was set to 30 to 40 kg/hr, the screw revolution was set to 250 rpm, the vacuum degree of the vent was set to 3 kPa, and the extrusion temperature from the first feed port to the die was set to 230°C to obtain a pellet.

Then, a T die having a width of 150 mm and a lip width of 500 μm and a film take-up device were set in the 15 mmΦ double-screw extruder of Technovel Corporation to mold the obtained pellet at 230°C so as to obtain a transparent extruded film having a thickness of 75 μm. The tensile elongation under heat, transmittance and b value of the obtained film were measured.

Thereafter, an anchor coat layer was formed on the film by using the VM Anchor P331S (containing a polyester polyol and nitrocellulose in a solvent in a weight ratio of 1:1) of Toyo Ink Manufacturing Co., Ltd. and the Takenate D-140N (containing an IPDI-based isocyanate prepolymer [adduct of IPDI and TMP] in a solvent) of Mitsui Chemicals Inc. as a curing agent, mixing them together in a solid weight ratio of the main agent to the curing agent of 1:1.33 and curing the resulting mixture. Thereafter, the weather discoloration of the obtained film was evaluated. The evaluation results are shown in Table 1.

Example 2

<production of polycarbonate resin>

A pellet was obtained and evaluated in the same manner as in Example 1 except that 411 parts of ISS, 99 parts of ND and 750 part of DPC were used as raw materials.

<production of film>

Thereafter, a resin composition was produced by using the obtained pellet in the same manner as in Example 1 and then a film was formed in the same manner as in Example 1. The evaluation results are shown in Table 1.

Example 3

<production of polycarbonate resin>

A pellet was obtained and evaluated in the same manner as in Example 1 except that 366 parts of ISS, 219 parts of 3,9-bis(2-hydroxy-1,1-dimethylethyl)-2,4,8,10-tetraoxaspiro(5.5)undecane (to be abbreviated as "SPG" hereinafter), 33 parts of 1, 9-nonanediol (to be abbreviated as "ND" hereinafter) and 750 parts of DPC were used as raw materials.

<production of film>

Thereafter, a resin composition was produced by using the obtained pellet in the same manner as in Example 1 and then a film was formed in the same manner as in Example 1. The evaluation results are shown in Table 1.

Example 4

<production of polycarbonate resin>

A pellet was obtained and evaluated in the same manner as in Example 1 except that 366 parts of ISS, 125 parts of SPG, 82 parts of ND and 750 part of DPC were used as raw materials.

<production of film>

Thereafter, a resin composition was produced by using the obtained pellet in the same manner as in Example 1 and then a film was formed in the same manner as in Example 1. The evaluation results are shown in Table 1.

Example 5

<production of polycarbonate resin>

A pellet was obtained and evaluated in the same manner as in Example 1 except that 432 parts of ISS, 62 parts of 1,6-hexanediol (to be abbreviated as "HD" hereinafter) and 750 part of DPC were used as raw materials.

<production of film>

Thereafter, a resin composition was produced by using the obtained pellet in the same manner as in Example 1 and then a film was formed in the same manner as in Example 1. The evaluation results are shown in Table 1.

Example 6

<production of film>

A resin composition was produced in the same manner as in Example 1 except that the polycarbonate resin obtained in Example 1 was used and the amount of 2,2-methylenebis[6-(2H-benzotriazol-2-yl)-4-(1,1,3,3-tetramethylbutyl)phenol] was changed to 0.6 part by weight and then a film was formed in the same manner as in Example 1. The evaluation results are shown in Table 1.

Example 7

<production of film>

A resin composition was produced in the same manner as in Example 1 except that the polycarbonate resin obtained in Example 1 was used and the amount of 2,2-methylenebis[6-(2H-benzotriazol-2-yl)-4-(1,1,3,3-tetramethylbutyl)phenol] was changed to 0.1 part by weight and then a film was formed in the same manner as in Example 1. The

evaluation results are shown in Table 1.

Example 8

<production of film>

A resin composition was produced in the same manner as in Example 1 except that the polycarbonate resin obtained in Example 1 was used and the amount of Macrolex Blue RR was changed to 0.003 part by weight and then a film was formed in the same manner as in Example 1. The evaluation results are shown in Table 1.

Example 9

<production of film>

A resin composition was produced in the same manner as in Example 1 except that the polycarbonate resin obtained in Example 1 was used and the amount of Macrolex Blue RR was changed to 0.001 part by weight and then a film was formed in the same manner as in Example 1. The evaluation results are shown in Table 1.

Example 10

<production of film>

A resin composition was produced in the same manner as in Example 1 except that the polycarbonate resin obtained in Example 1 was used and the amount of ADK STAB LA-77Y was changed to 0.2 part by weight and then a film was formed in the same manner as in Example 1. The evaluation results are shown in Table 1.

Example 11

<production of film

A resin composition was produced in the same manner as in Example 1 except that the polycarbonate resin obtained in Example 1 was used and the amount of ADK STAB LA-77Y was changed to 0.05 part by weight and then a film was formed in the same manner as in Example 1. The evaluation results are shown in Table 1.

Comparative Example 1

<production of polycarbonate resin>

A pellet was obtained and evaluated in the same manner as in Example 1 except that 381 parts of ISS, 103 parts of HD and 750 part of DPC were used as raw materials.

<production of film>

Then, the obtained pellet was dried at 90°C for 12 hours with a hot air circulation drier. 0.1 part by weight of Irgafos 168 (manufactured by BASF; tris(2,6-di-tert-butylphenyl)phosphite) which is a phosphorus-based stabilizer as an antioxidant was uniformly mixed with 100 parts by weight of the obtained pellet, and the resulting mixture was injected into an extruder to produce a resin composition. A vented double-screw extruder having a diameter of 30 mm (TEX30α-35BW-3V of The Nippon Steel Works, Ltd.) was used as the extruder. As extrusion conditions, the discharge rate was set to 30 to 40 kg/hr, the screw revolution was set to 250 rpm, the vacuum degree of the vent was set to 3 kPa, and the extrusion temperature from the first feed port to the die was set to 230°C to obtain a pellet. Then, a T die having a width of 150 mm and a lip width of 500 μm and a film take-up device were set in the 15 mmϕ double-screw extruder of Technovel Corporation to mold the obtained pellet at 230°C so as to obtain a transparent extruded film having a thickness of 75 μm. The evaluation results are shown in Table 1.

Comparative Example 2

<production of polycarbonate resin>

A pellet was obtained and evaluated in the same manner as in Example 1 except that 254 parts of ISS, 251 parts of 1,4-cyclohexane dimethanol (to be abbreviated as "CHDM" hereinafter) and 750 part of DPC were used as raw materials.

<production of film>

Thereafter, a resin composition was produced by using the obtained pellet in the same manner as in Comparative Example 1 and then a film was formed in the same manner as in Comparative Example 1. The evaluation results are shown in Table 1.

Abbreviated names in Table 1 are given below.

(component a)

ISS: isosorbide
ND: 1,9-nonanediol
SPG: 3,9-bis(2-hydroxy-1,1-dimethylethyl)-2,4,8,10-tetraoxaspiro(5.5)undecane
HD: 1,6-hexanediol
CHDM: 1,4-cyclohexane dimethanol

(component b: ultraviolet absorbent)

UV-2 (benzotriazole type):
2,2-methylenebis[6-(2H-benzotriazol-2-yl)-4-(1,1,3,3-tetramethylbutyl)phenol]

(component c: coloring agent)
BRR: Macrolex Blue RR

(component d: hindered phenol-based optical stabilizer)

HALS-1: ADK STAB LA-77Y (manufactured by ADEKA Corporation) (antioxidant)
Irgafos 168 (manufactured by BASF;
tris(2,6-di-tert-butylphenyl)phosphite)

Table 1 (1)

| | PC resin composition | | Ultraviolet absorbent (parts by weight based on 100 parts by weight of PC) | Coloring agent (parts by weight based on 100 parts by weight of PC) | Optical stabilizer (parts by weight based on 100 parts by weight of PC) | Antioxidant (parts by weight based on 100 parts by weight based on 100 parts by weight of PC) |
|---|---|---|---|---|---|---|
| | | | UV-2 | BRR | HALS-1 | |
| Ex.1 | ISS/ND | 88/12 | 0.3 | 0.0015 | 0.1 | 0.1 |
| Ex.2 | ISS/ND | 82/18 | 0.3 | 0.0015 | 0.1 | 0.1 |
| Ex.3 | ISS/SPG/ND | 73/21/6 | 0.3 | 0.0015 | 0.1 | 0.1 |
| Ex.4 | ISS/SPG/ND | 73/12/15 | 0.3 | 0.0015 | 0.1 | 0.1 |
| Ex.5 | ISS/HD | 85/15 | 0.3 | 0.0015 | 0.1 | 0.1 |
| Ex.6 | ISS/ND | 88/12 | 0.6 | 0.0015 | 0.1 | 0.1 |
| Ex.7 | ISS/ND | 88/12 | 0.1 | 0.0015 | 0.1 | 0.1 |

(continued)

| | PC resin composition | | Ultraviolet absorbent (parts by weight based on 100 parts by weight of PC) | Coloring agent (parts by weight based on 100 parts by weight of PC) | Optical stabilizer (parts by weight based on 100 parts by weight of PC) | Antioxidant (parts by weight based on 100 parts by weight based on 100 parts by weight of PC) |
|---|---|---|---|---|---|---|
| | | | UV-2 | BRR | HALS-1 | |
| Ex.8 | ISS/ND | 88/12 | 0.3 | 0.003 | 0.1 | 0.1 |
| Ex.9 | ISS/ND | 88/12 | 0.3 | 0.001 | 0.1 | 0.1 |
| Ex.10 | ISS/ND | 88/12 | 0.3 | 0.0015 | 0.2 | 0.1 |
| Ex.11 | ISS/ND | 88/12 | 0.3 | 0.0015 | 0.05 | 0.1 |
| C.Ex. 1 | ISS/HD | 75/25 | 0 | 0 | 0 | 0.1 |
| C.Ex. 2 | ISS/CHDM | 50/50 | 0 | 0 | 0 | 0.1 |
| Ex.: Example, C.Ex.: Comparative Example | | | | | | |

Table 1 (2)

| | Evaluation results | | | |
|---|---|---|---|---|
| | Specific viscosity | Tg | Water absorption | TW value |
| | - | °C | % | |
| Example 1 | 0.353 | 121 | 1.8 | 3.0 |
| Example 2 | 0.401 | 101 | 1.6 | 2.4 |
| Example 3 | 0.394 | 120 | 1.5 | 3.3 |
| Example 4 | 0.456 | 100 | 1.5 | 2.5 |
| Example 5 | 0.337 | 119 | 3.0 | 1.8 |
| Example 6 | 0.353 | 121 | 1.8 | 3.0 |
| Example 7 | 0.353 | 121 | 1.8 | 3.0 |
| Example 8 | 0.353 | 121 | 1.8 | 3.0 |
| Example 9 | 0.353 | 121 | 1.8 | 3.0 |
| Example 10 | 0.353 | 121 | 1.8 | 3.0 |
| Example 11 | 0.353 | 121 | 1.8 | 3.0 |
| Comparative Example 1 | 0.313 | 100 | 2.2 | 1.8 |
| Comparative Example 2 | 0.342 | 100 | 1.7 | 2.3 |

Table 1 (3)

| | Evaluation results | | | | |
|---|---|---|---|---|---|
| | Pencil hardness | Tensile elongation under heat | Transmittance (360nm) | b value | Weather discoloration |
| | - | % | % | | (ΔE) |
| Example 1 | H | 191 | 0.6 | -0.3 | 0.5 |
| Example 2 | H | 203 | 0.6 | -0.3 | 0.4 |
| Example 3 | H | 214 | 0.6 | -0.3 | 0.4 |
| Example 4 | H | 188 | 0.6 | -0.3 | 0.4 |
| Example 5 | H | 64 | 0.7 | -0.3 | 0.4 |
| Example 6 | H | 178 | 0.4 | -0.1 | 0.3 |
| Example 7 | H | 196 | 1.2 | -0.3 | 0.7 |
| Example 8 | H | 182 | 0.6 | -0.6 | 0.6 |
| Example 9 | H | 196 | 0.6 | 0.1 | 0.4 |
| Example 10 | H | 192 | 0.6 | -0.3 | 0.4 |
| Example 11 | H | 184 | 0.6 | -0.3 | 0.6 |
| Comparative Example 1 | F | 61 | 91 | 0.6 | 5.8 |
| Comparative Example 2 | HB | - | 91 | 0.5 | 5.9 |

Examples 12 to 24

The following examples are provided for the purpose of further illustrating the present invention but are in no way to be taken as limiting. "Parts" in these examples means "parts by weight". Resins and evaluations methods used in the examples are as follows.

1. Polymer composition ratio (NMR)

Each of the recurring units was measured with the proton NMR of the JNM-AL400 of JEOL Ltd. to calculate the polymer composition ratio (molar ratio).

2. Specific viscosity measurement

This was obtained from a solution prepared by dissolving 0.7 g of the polycarbonate resin in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride, and "t" is the number of seconds required for the dropping of a sample solution]

3. Glass transition temperature (Tg)

This was measured by using 8 mg of the polycarbonate resin at a temperature elevation rate of 20°C/min in a nitrogen atmosphere (nitrogen flow rate: 40 ml/min) with the DSC-2910 thermal analyzing system of TA Instruments in accordance with JIS K7121.

4. Saturated water absorption (Wa)

As for saturated water absorption, a cast film having a thickness of 200 μm obtained by evaporating methylene chloride after a pellet was dissolved in methylene chloride was dried at 100°C for 12 hours and immersed in 25°C water for 72 hours to measure its weight increase so as to obtain its water absorption from the following equation.

Water absorption (%) = {(weight of resin after water absorption - weight of resin before water)/weight of resin before water absorption x 100

5. TW value

The TW value was obtained from the following equation.

TW value = glass transition temperature (Tg) x 0.04 - water absorption (Wa)

6. Pencil hardness

A pellet which was dried at 90°C for 12 hours was molded into a 2 mm-thick rectangular plate at a cylinder temperature of 250°C, a mold temperature of 80°C and a molding cycle of 1 minute by using the J85-ELIII injection molding machine of The Japan Steel Works, Ltd. (JSW) to measure the pencil hardness of the molded test piece by the JIS K5600 base map plate test method.

7. Hue

The hue (a value, b value) of a 75 μm-thick film was measured by using the SE-2000 spectroscopic color difference meter (C light source, transmission) of Nippon Denshoku Industries Co., Ltd.

8. Tensile elongation under heat

A 75 μm-thick film was cut to a size of 110 mm x 15 mm, and the inside of a tank was heated at Tg of the film to measure the tensile fracture elongation of the film by using the AX-G plus autograph of Shimadzu Corporation and average 10 measurement values.

9. Transmittance (315 nm)

The light transmittance at 315 nm of the 75 μm-thick film was measured by using the U-4100 spectrophotometer of Hitachi, Ltd.

10. Weather resistance

For the evaluation of weather resistance, a test was conducted by using the QUV accelerated weathering machine. During the test, the UVB-313 lamp was used. Ultraviolet exposure and humidification were repeated every 4 hours for a total of 1,500 hours while a 75 μm-thick film sample was left as it was so as to check the surface appearance of the film which is shown in the table. The term "surface appearance" means whether surface cracking or whitening occurs or not. In the table, ○ means no surface whitening or cracking, Δ means slight surface whitening or cracking, and ×means remarkable surface whitening or cracking. UV exposure; inside temperature of testing machine of 60°C, irradiance of 30 $W/m^2$ (300 ~ 400 nm) Humidification; inside temperature of testing machine of 50°C, humidity of 100 %

11. Moist heat resistance

A pellet which was dried at 90°C for 12 hours was molded into a 2 mm-thick rectangular plate at a cylinder temperature of 250°C, a mold temperature of 80°C and a molding cycle of 1 minute by using the J85-ELIII injection molding machine of The Japan Steel Works, Ltd. (JSW) to carry out a moist heat test on the molded test piece at 85°C

and 85 %RH for 500 hours. When the molecular weight before the moist heat test is represented by Mv1 and the molecular weight after the test is represented by Mv2, ΔMv is obtained from the following equation.

$$\Delta Mv = Mv1 - MV2$$

The moist heat resistance was evaluated based on the following indices.

| | |
|---|---|
| $\Delta Mv \leqq 1000$ | : ○ |
| $2000 \geqq \Delta Mv > 1000$ | : Δ |
| $\Delta Mv > 2000$ | : × |

The molecular weight in this evaluation is a viscosity average molecular weight measured by the following method. The specific viscosity ($\eta_{sp}$) calculated from the following equation is obtained from a solution prepared by dissolving 0.7 g of the resin composition in 100 ml of methylene chloride at 20°C by using an Ostwald viscometer.

$$\text{Specific viscosity } (\eta_{sp}) = (t - t_0)/t_0$$

["$t_0$" is the number of seconds required for the dropping of methylene chloride, and "t" is the number of seconds required for the dropping of a sample solution]
The viscosity average molecular weight (Mv) is calculated from the obtained specific viscosity ($\eta_{sp}$) based on the following equation.
$\eta_{sp}/c = [\eta] + 0.45 \times [\eta]^2 c$ ($[\eta]$ represents an intrinsic viscosity)

$$[\eta] = 1.23 \times 10^{-4} \times Mv^{0.83}$$

c = 0.7

12. Maximum absorbance (λmax) of ultraviolet absorbent

The absorbance of a methylene chloride solution of an ultraviolet absorbent (10 mg/L) was measured by using a spectrophotometer (U-3310 of Hitachi, Ltd.).
The λmax and ultraviolet absorption of UV-1 (propanoic acid, 2-[4-[4,6-bis([1,1'-biphenyl]-4-yl)-1,3,5-triazin-2-yl]-3-hydroxyphenoxy]-isooctyl ester) are given below. Maximum absorbance (λmax); wavelength of 322 nm Ultraviolet absorption at a wavelength of 315 nm: 1.0 %
The λmax and ultraviolet absorption of UV-2 (2,2-methylenebis[6-(2H-benzotriazol-2-yl)-4-(1,1,3,3-tetramethylbutyl)phenol] are given below. Maximum absorbance (λmax); wavelength of 306 nm and wavelength of 309 nm Ultraviolet absorption at a wavelength of 315 nm: 0.46 %

Example 12

<production of polycarbonate resin>

441 parts of isosorbide (to be abbreviated as ISS), 66 parts of 1,9-nonanediol (to be abbreviated as ND hereinafter), 750 parts of diphenyl carbonate (to be abbreviated as DPC), and $0.8 \times 10^{-2}$ part of tetramethylammonium hydroxide and $0.6 \times 10^{-4}$ part of sodium hydroxide as catalysts were heated at 180°C in a nitrogen atmosphere to be molten. Thereafter, the degree of evacuation was adjusted to 13.4 kPa over 30 minutes. After the temperature was raised up to 240°C at a rate of 60°C/hr and maintained at that temperature for 10 minutes, the degree of evacuation was set to 133 Pa or less over 1 hour. A reaction was carried out under agitation for 6 hours in total, nitrogen was discharged from the bottom of a reaction tank under increased pressure, and the obtained product was cut with a pelletizer while it was cooled in a water tank to obtain a pellet. The specific viscosity of the pellet was measured.

(production of film)

Then, the obtained pellet was dried at 90°C for 12 hours with a hot air circulation drier. 0.5 part by weight of

(propanoic acid, 2-[4-[4,6-bis([1,1'-biphenyl]-4-yl)-1,3,5-triazin-2-yl]-3-hydroxyphenoxy]-isooctyl ester) (to be abbreviated as "UV-1") which is an ultraviolet absorbent having a triazine skeleton including a biphenyl structure as the ultraviolet absorbent (component b), 0.1 part by weight of the ADK STAB LA-77Y (to be abbreviated as HALS-1) of ADEKA Corporation which is a secondary amine compound as the hindered amine-based optical stabilizer (component d), 0.1 part by weight of the Irgafos 168 (tris(2,6-di-tert-butylphenyl)phosphite) of BASF which is a phosphorus-based stabilizer as an antioxidant and 0.0015 part by weight of Macrolex Blue RR (to be abbreviated as BRR) as the coloring agent (component c) were uniformly mixed with 100 parts by weight of the obtained pellet, and the resulting mixture was injected into an extruder to produce a resin composition.

A vented double-screw extruder having a diameter of 30 mm (TEX30α-35BW-3V of The Nippon Steel Works, Ltd.) was used as the extruder. As extrusion conditions, the discharge rate was set to 30 to 40 kg/hr, the screw revolution was set to 250 rpm, the vacuum degree of the vent was set to 3 kPa, and the extrusion temperature from the first feed port to the die was set to 230°C to obtain a pellet.

Then, a T die having a width of 150 mm and a lip width of 500 μm and a film take-up device were set in the 15 mm ϕ double-screw extruder of Technovel Corporation to mold the obtained pellet at 230°C so as to obtain a transparent extruded film having a thickness of 75 μm. The tensile elongation under heat, transmittance (315 nm) and hue (a value, b value) of the obtained film were measured.

Thereafter, an anchor coat layer was formed on the film by using the VM Anchor P331S (containing a polyester polyol and nitrocellulose in a solvent in a weight ratio of 1:1) of Toyo Ink Manufacturing Co., Ltd. and the Takenate D-140N (containing an IPDI-based polyisocyanate prepolymer [adduct of IPDI and TMP] in a solvent) of Mitsui Chemicals Inc. as a curing agent, mixing them together in a solid weight ratio of the main agent to the curing agent of 1:1.33 and curing the resulting mixture. Thereafter, the weather resistance and moist heat resistance of the cured product were evaluated. The evaluation results are shown in Table 2.

Example 13

<production of polycarbonate resin>

A pellet was obtained and evaluated in the same manner as in Example 12 except that 411 parts of ISS, 99 parts of ND and 750 part of DPC were used as raw materials.

<production of film>

Thereafter, a resin composition was produced by using the obtained pellet in the same manner as in Example 12 and then a film was formed in the same manner as in Example 12. The evaluation results are shown in Table 2.

Example 14

<production of polycarbonate resin>

A pellet was obtained and evaluated in the same manner as in Example 12 except that 366 parts of ISS, 219 parts of 3,9-bis(2-hydroxy-1,1-dimethylethyl)-2,4,8,10-tetraoxaspiro(5.5)undecane (to be abbreviated as SPG hereinafter), 33 parts of 1, 9-nonanediol (to be abbreviated as ND hereinafter) and 750 part of DPC were used as raw materials.

<production of film>

Thereafter, a resin composition was produced by using the obtained pellet in the same manner as in Example 12 and then a film was formed in the same manner as in Example 12. The evaluation results are shown in Table 2.

Example 15

<production of polycarbonate resin>

A pellet was obtained and evaluated in the same manner as in Example 12 except that 366 parts of ISS, 125 parts of SPG, 82 parts of ND and 750 part of DPC were used as raw materials.

<production of film>

Thereafter, a resin composition was produced by using the obtained pellet in the same manner as in Example

12 and then a film was formed in the same manner as in Example 12. The evaluation results are shown in Table 2.

Example 16

<production of polycarbonate resin>

A pellet was obtained and evaluated in the same manner as in Example 12 except that 432 parts of ISS, 62 parts of 1, 6-hexanediol (to be abbreviated as HD hereinafter) and 750 parts of DPC were used as raw materials.

<production of film>

Thereafter, a resin composition was produced by using the obtained pellet in the same manner as in Example 12 and then a film was formed in the same manner as in Example 12. The evaluation results are shown in Table 2.

Example 17

<production of film>

A resin composition was produced in the same manner as in Example 12 except that the polycarbonate resin obtained in Example 12 was used and the amount of UV-1 was changed to 0.7 part by weight and then a film was formed in the same manner as in Example 12. The evaluation results are shown in Table 2.

Example 18

<production of film>

A resin composition was produced in the same manner as in Example 12 except that the polycarbonate resin obtained in Example 12 was used and the amount of UV-1 was changed to 0.3 part by weight and then a film was formed in the same manner as in Example 12. The evaluation results are shown in Table 2.

Example 19

<production of film>

A resin composition was produced in the same manner as in Example 12 except that the polycarbonate resin obtained in Example 12 was used and the amount of BRR was changed to 0.003 part by weight and then a film was formed in the same manner as in Example 12. The evaluation results are shown in Table 2.

Example 20

<production of film>

A resin composition was produced in the same manner as in Example 12 except that the polycarbonate resin obtained in Example 12 was used and the amount of BRR was changed to 0.001 part by weight and then a film was formed in the same manner as in Example 12. The evaluation results are shown in Table 2.

Example 21

<production of film>

A resin composition was produced in the same manner as in Example 12 except that the polycarbonate resin obtained in Example 12 was used and the amount of Sumiton Cyanine Blue GH (to be abbreviated as BGH hereinafter) as a coloring agent (component c) was changed to 0.0015 part by weight and then a film was formed in the same manner as in Example 12. The evaluation results are shown in Table 2.

Example 22

<production of film>

A resin composition was produced in the same manner as in Example 12 except that the polycarbonate resin obtained in Example 12 was used and the amount of ADK STAB LA-77Y was changed to 0.2 part by weight and then a film was formed in the same manner as in Example 12. The evaluation results are shown in Table 2.

Example 23

<production of film>

A resin composition was produced in the same manner as in Example 12 except that the polycarbonate resin obtained in Example 12 was used and the amount of ADK STAB LA-77Y was changed to 0.05 part by weight and then a film was formed in the same manner as in Example 12. The evaluation results are shown in Table 2.

Example 24

<production of film>

A resin composition was produced in the same manner as in Example 12 except that the polycarbonate resin obtained in Example 12, 0.5 part by weight of UV-1 as an ultraviolet absorbent (component b), 0.5 part by weight of 2,2-methylenebis[6-(2H-benzotriazol-2-yl)-4-(1,1,3,3-tetramethylbutyl)phenol] (to be abbreviated as UV-2 hereinafter) as an ultraviolet absorbent having a benzotriazole skeleton, 0.1 part by weight of ADK STAB LA-77Y (HALS-1) as a hindered amine optical stabilizer (component d), 0.1 part by weight of Irgafos 168 as an antioxidant and 0.0015 part by weight of BRR as a coloring agent (component c) were used and then a film was formed in the same manner as in Example 12. The evaluation results are shown in Table 2.

Comparative Example 3

<production of polycarbonate resin>

A pellet was obtained and evaluated in the same manner as in Example 12 except that 381 parts of ISS, 103 parts of HD and 750 part of DPC were used as raw materials.

<production of film>

Then, the obtained pellet was dried at 90°C for 12 hours with a hot air circulation drier. 0.1 part by weight of Irgafos 168 (manufactured by BASF; tris(2,6-di-tert-butylphenyl)phosphite) which is a phosphorus-based stabilizer as an antioxidant was uniformly mixed with 100 parts by weight of the obtained pellet, and the resulting mixture was injected into an extruder to produce a resin composition. A vented double-screw extruder having a diameter of 30 mm (TEX30α-35BW-3V of The Nippon Steel Works, Ltd.) was used as the extruder. As extrusion conditions, the discharge rate was set to 30 to 40 kg/hr, the screw revolution was set to 250 rpm, the vacuum degree of the vent was set to 3 kPa, and the extrusion temperature from the first feed port to the die was set to 230°C to obtain a pellet.

Then, a T die having a width of 150 mm and a lip width of 500 μm and a film take-up device were set in the 15 mm ϕ double-screw extruder of Technovel Corporation to mold the obtained pellet at 230°C so as to obtain a transparent extruded film having a thickness of 75 μm. The evaluation results are shown in Table 2.

Comparative Example 4

<production of polycarbonate resin>

A pellet was obtained and evaluated in the same manner as in Example 12 except that 254 parts of ISS, 251 parts of 1,4-cyclohexane dimethanol (to be abbreviated as CHDM hereinafter) and 750 part of DPC were used as raw materials.

<production of film>

Thereafter, a resin composition was produced by using the obtained pellet in the same manner as in Comparative Example 3 and then a film was formed in the same manner as in Comparative Example 3. The evaluation results are shown in Table 2.

Examples 25 to 40

Pellets and films were produced and evaluated in the same manner as in Example 12 with compositions shown in Table 2(4).
Abbreviated names in Table 2 are given below.

(component a)

ISS: isosorbide
ND: 1,9-nonanediol
SPG: 3,9-bis(2-hydroxy-1,1-dimethylethyl)-2,4,8,10-tetraoxaspiro(5.5)undecane
HD: 1,6-hexanediol
CHDM: 1,4-cycolohexane dimethanol

(component b: ultraviolet absorbent)

UV-1 (triazine type): propanoic acid,
2-[4-[4,6-bis([1,1'-biphenyl]-4-yl)-1,3,5-triazine-2-yl] -3-hydroxyphenoxy]-isooctyl ester)
UV-2 (benzotriazole type):
2,2-methylenebis[6-(2H-benzotriazol-2-yl)-4-(1,1,3,3-tetramethylbutyl)phenol]

(component c: coloring agent)

BGH: Sumitone Cyanine Blue GH of Sumitomo Chemical Co., Ltd.
BRR: MACROLEX Blue RR of Bayer AG
VB: MACROLEX Violet B of Bayer AG

(component d: hindered phenol-based optical stabilizer)

HALS-1: ADK STAB LA-77Y (of ADEKA Corporation) (compound including a structure in which $R^1$ to $R^4$ in the formula (D) are each a methyl group and $R^5$ is a hydrogen atom)
HALS-2: ADK STAB LA-52 of ADEKA Corporation (compound including a structure in which $R^1$ to $R^4$ in the formula (D) are each a methyl group and $R^5$ is a methyl group) (antioxidant)
Irgafos 168 (manufactured by BASF;
tris(2,6-di-tert-butylphenyl)phosphite)

Table 2(1)

| | PC resin composition | | Ultraviolet absorbent (parts by weight based on 100 parts by weight of PC) | | Coloring agent (parts by weight based on 100 parts by weight of PC) | | Optical stabilizer (parts by weight based on 100 parts by weight of PC) | | Antioxidant (parts by weight based on 100 parts by weight of PC) |
|---|---|---|---|---|---|---|---|---|---|
| | | | UV-1 | UV-2 | BRR | BGH | HALS-1 | HALS-2 | |
| Ex.12 | ISS/ND | 88/12 | 0.5 | - | 0.0015 | - | 0.1 | - | 0.1 |
| Ex.13 | ISS/ND | 82/18 | 0.5 | - | 0.0015 | - | 0.1 | - | 0.1 |
| Ex.14 | ISS/SPG/ND | 73/21/6 | 0.5 | - | 0.0015 | - | 0.1 | - | 0.1 |
| Ex.15 | ISS/SPG/ND | 73/12/15 | 0.5 | - | 0.0015 | - | 0.1 | - | 0.1 |

(continued)

| | PC resin composition | | Ultraviolet absorbent (parts by weight based on 100 parts by weight of PC) | | Coloring agent (parts by weight based on 100 parts by weight of PC) | | Optical stabilizer (parts by weight based on 100 parts by weight of PC) | | Antioxidant (parts by weight based on 100 parts by weight of PC) |
|---|---|---|---|---|---|---|---|---|---|
| | | | UV-1 | UV-2 | BRR | BGH | HALS-1 | HALS-2 | |
| Ex.16 | ISS/HD | 85/15 | 0.5 | - | 0.0015 | - | 0.1 | - | 0.1 |
| Ex.17 | ISS/ND | 88/12 | 0.7 | - | 0.0015 | - | 0.1 | - | 0.1 |
| Ex.18 | ISS/ND | 88/12 | 0.3 | - | 0.0015 | - | 0.1 | - | 0.1 |
| Ex.19 | ISS/ND | 88/12 | 0.5 | - | 0.003 | - | 0.1 | - | 0.1 |
| Ex.20 | ISS/ND | 88/12 | 0.5 | - | 0.001 | - | 0.1 | - | 0.1 |
| Ex.21 | ISS/ND | 88/12 | 0.5 | - | - | 0.0015 | 0.1 | - | 0.1 |
| Ex.22 | ISS/ND | 88/12 | 0.5 | - | 0.0015 | - | 0.2 | - | 0.1 |
| Ex.23 | ISS/ND | 88/12 | 0.5 | - | 0.0015 | - | 0.05 | - | 0.1 |
| Ex.24 | ISS/ND | 88/12 | 0.5 | 0.5 | 0.0015 | - | 0.1 | - | 0.1 |
| C.Ex. 3 | ISS/HD | 75/25 | - | - | - | - | - | - | 0.1 |
| C.Ex. 4 | ISS/CHDM | 50/50 | - | - | - | - | - | - | 0.1 |
| Ex.: Example, C.Ex.: Comparative Example | | | | | | | | | |

Table 2(2)

| | Evaluation results | | | |
|---|---|---|---|---|
| | Specific viscosity | Tg | Water absorption | TW value |
| | - | °C | % | - |
| Ex. 12 | 0.353 | 121 | 1.8 | 3.0 |
| Ex. 13 | 0.401 | 101 | 1.6 | 2.4 |
| Ex. 14 | 0.394 | 120 | 1.5 | 3.3 |
| Ex. 15 | 0.456 | 100 | 1.5 | 2.5 |
| Ex. 16 | 0.337 | 119 | 3.0 | 1.8 |
| Ex. 17 | 0.353 | 121 | 1.8 | 3.0 |
| Ex. 18 | 0.353 | 121 | 1.8 | 3.0 |
| Ex. 19 | 0.353 | 121 | 1.8 | 3.0 |
| Ex. 20 | 0.353 | 121 | 1.8 | 3.0 |
| Ex. 21 | 0.353 | 121 | 1.8 | 3.0 |
| Ex. 22 | 0.353 | 121 | 1.8 | 3.0 |
| Ex. 23 | 0.353 | 121 | 1.8 | 3.0 |
| Ex. 24 | 0.355 | 121 | 1.8 | 3.0 |
| C.Ex.3 | 0.313 | 100 | 2.2 | 1.8 |

(continued)

| | Evaluation results | | | |
|---|---|---|---|---|
| | Specific viscosity | Tg | Water absorption | TW value |
| | - | °C | % | - |
| C.Ex.4 | 0.342 | 100 | 1.7 | 2.3 |
| Ex.: Example, C.Ex.: Comparative Example | | | | |

Table 2(3)

| | Evaluation results | | | | | | |
|---|---|---|---|---|---|---|---|
| | Pencil hardness | Tensile elongation under heat | Transmittance (315nm) | Hue | | Weather resistance | Moist heat resistance |
| | - | % | % | a value | b value | - | - |
| Ex.12 | H | 191 | 0.1 | 0.2 | -0.3 | ○ | Δ |
| Ex.13 | H | 203 | 0.1 | 0.2 | -0.3 | ○ | Δ |
| Ex.14 | H | 214 | 0.1 | 0.2 | -0.3 | ○ | Δ |
| Ex.15 | H | 188 | 0.1 | 0.2 | -0.3 | ○ | Δ |
| Ex.16 | H | 64 | 0.1 | 0.2 | -0.3 | ○ | Δ |
| Ex.17 | H | 178 | 0.03 | 0.1 | -0.1 | ○ | Δ |
| Ex.18 | H | 196 | 0.7 | 0.2 | -0.3 | Δ | Δ |
| Ex.19 | H | 182 | 0.1 | 0.1 | -0.6 | ○ | Δ |
| Ex.20 | H | 196 | 0.1 | 0.3 | 0.1 | ○ | Δ |
| Ex.21 | H | 191 | 0.1 | -1.4 | -0.3 | ○ | Δ |
| Ex.22 | H | 192 | 0.1 | 0.2 | -0.3 | ○ | Δ |
| Ex.23 | H | 184 | 0.1 | 0.2 | -0.3 | ○ | Δ |
| Ex.24 | H | 193 | 0.1 | 0.2 | -0.3 | ○ | Δ |
| C.Ex. 3 | F | 61 | 91 | 0.4 | 0.6 | × | ○ |
| C.Ex. 4 | HB | - | 91 | 0.4 | 0.5 | × | ○ |
| Ex.: Example, C.Ex.: Comparative Example | | | | | | | |

Table 2(4)

| | PC Composition | | Ultraviolet absorbent (parts by weight based on 100 parts by weight of PC) | | Coloring agent (parts by weight based on 100 parts by weight of PC) | | | Optical stabilizer (parts by weight based on 100 parts by weight of PC) | | Antioxidant (parts by weight based on 100 parts by weight of PC) |
|---|---|---|---|---|---|---|---|---|---|---|
| | | | UV-1 | UV-2 | BRR | BGH | VB | HALS-1 | HALS-2 | |
| Ex. 25 | ISS/SPG/ND | 73/21/6 | 0.5 | - | 0.0015 | - | - | - | 0.1 | 0.1 |
| Ex. 26 | ISS/SPG/ND | 73/12/15 | 0.5 | - | 0.0015 | - | - | - | 0.1 | 0.1 |
| Ex. 27 | ISS/SPG/ND | 73/21/6 | 0.5 | 0.5 | 0.0015 | - | - | 0.1 | - | 0.1 |
| Ex. 28 | ISS/SPG/ND | 73/21/6 | 0.3 | 0.2 | 0.0015 | - | - | 0.1 | - | 0.1 |
| Ex. 29 | ISS/SPG/ND | 73/21/6 | 0.3 | 0.2 | 0.0070 | - | 0.0030 | 0.1 | - | 0.1 |
| Ex. 30 | ISS/SPG/ND | 73/12/15 | 0.5 | 0.5 | 0.0015 | - | - | 0.1 | - | 0.1 |
| Ex. 31 | ISS/SPG/ND | 73/12/15 | 0.3 | 0.2 | 0.0015 | - | - | 0.1 | - | 0.1 |
| Ex. 32 | ISS/SPG/ND | 73/12/15 | 0.3 | 0.2 | 0.0070 | - | 0.0030 | 0.1 | - | 0.1 |
| Ex. 33 | ISS/SPG/ND | 73/12/15 | 0.5 | 0.5 | 0.0015 | - | - | - | 0.1 | 0.1 |
| Ex. 34 | ISS/SPG/ND | 73/12/15 | 0.3 | 0.2 | 0.0015 | - | - | - | 0.1 | 0.1 |
| Ex. 35 | ISS/SPG/ND | 73/12/15 | 0.3 | 0.2 | 0.0070 | - | 0.0030 | - | 0.1 | 0.1 |
| Ex. 36 | ISS/SPG/ND | 73/12/15 | 0.3 | 0.2 | 0.0100 | - | 0.0050 | - | 0.1 | 0.1 |
| Ex. 37 | ISS/SPG/ND | 73/12/15 | 0.7 | 0.5 | 0.0070 | - | 0.0030 | - | 0.1 | 0.1 |

(continued)

| | PC Composition | | Ultraviolet absorbent (parts by weight based on 100 parts by weight of PC) | | Coloring agent (parts by weight based on 100 parts by weight of PC) | | | Optical stabilizer (parts by weight based on 100 parts by weight of PC) | | Antioxidant (parts by weight based on 100 parts by weight of PC) |
|---|---|---|---|---|---|---|---|---|---|---|
| | | | UV-1 | UV-2 | BRR | BGH | VB | HALS-1 | HALS-2 | |
| Ex. 38 | ISS/SPG/ND | 73/12/15 | 0.5 | - | 0.0015 | - | - | - | 0.05 | 0.1 |
| Ex. 39 | ISS/SPG/ND | 73/12/15 | 0.5 | - | 0.0015 | - | - | - | 0.2 | 0.1 |
| Ex. 40 | ISS/SPG/ND | 73/12/15 | 0.3 | 0.2 | 0.0070 | - | 0.0030 | - | 0.08 | 0.05 |
| Ex.: Example | | | | | | | | | | |

Table 2(5)

| | Evaluation | | | |
|---|---|---|---|---|
| | Specific viscosity | Tg | water absorption | TW value |
| | - | °C | % | - |
| Example 25 | 0.394 | 120 | 1.5 | 3.3 |
| Example 26 | 0.456 | 100 | 1.5 | 2.5 |
| Example 27 | 0.394 | 120 | 1.5 | 3.3 |
| Example 28 | 0.394 | 120 | 1.5 | 3.3 |
| Example 29 | 0.394 | 120 | 1.5 | 3.3 |
| Example 30 | 0.456 | 100 | 1.5 | 2.5 |
| Example 31 | 0.456 | 100 | 1.5 | 2.5 |
| Example 32 | 0.456 | 100 | 1.5 | 2.5 |
| Example 33 | 0.456 | 100 | 1.5 | 2.5 |
| Example 34 | 0.456 | 100 | 1.5 | 2.5 |
| Example 35 | 0.456 | 100 | 1.5 | 2.5 |
| Example 36 | 0.456 | 100 | 1.5 | 2.5 |
| Example 37 | 0.456 | 100 | 1.5 | 2.5 |
| Example 38 | 0.456 | 100 | 1.5 | 2.5 |
| Example 39 | 0.456 | 100 | 1.5 | 2.5 |
| Example 40 | 0.456 | 100 | 1.5 | 2.5 |

Table 2 (6)

| | Evaluation | | | | | | |
|---|---|---|---|---|---|---|---|
| | Pencil hardness | Tensile elongation under heat | Transmittance (315nm) | Hue | | Weather resistance | Moist heat resistance |
| | - | % | % | a value | b value | - | - |
| Example 25 | H | 215 | 0.1 | 0.2 | -0.3 | ○ | ○ |
| Example 26 | H | 190 | 0.1 | 0.2 | -0.3 | ○ | ○ |
| Example 27 | H | 195 | 0.1 | 0.2 | -0.2 | ○ | Δ |
| Example 28 | H | 192 | 0.65 | 0.2 | -0.3 | ○ | Δ |
| Example 29 | H | 189 | 0.65 | 0.0 | -1.8 | ○ | Δ |
| Example 30 | H | 187 | 0.1 | 0.2 | -0.3 | ○ | Δ |
| Example 31 | H | 188 | 0.65 | 0.2 | -0.3 | ○ | Δ |

(continued)

| | Evaluation | | | | | | |
|---|---|---|---|---|---|---|---|
| | Pencil hardness | Tensile elongation under heat | Transmittance (315nm) | Hue | | Weather resistance | Moist heat resistance |
| | - | % | % | a value | b value | - | - |
| Example 32 | H | 179 | 0.65 | 0.0 | -1.8 | ○ | Δ |
| Example 33 | H | 189 | 0.1 | 0.2 | -0.2 | ○ | ○ |
| Example 34 | H | 190 | 0.65 | 0.2 | -0.3 | ○ | ○ |
| Example 35 | H | 179 | 0.65 | 0.0 | -1.8 | ○ | ○ |
| Example 36 | H | 173 | 0.65 | 0.2 | -2.1 | ○ | ○ |
| Example 37 | H | 165 | 0.03 | 0.1 | -1.6 | ○ | ○ |
| Example 38 | H | 185 | 0.1 | 0.2 | -0.3 | ○ | ○ |
| Example 39 | H | 193 | 0.1 | 0.2 | -0.3 | ○ | ○ |
| Example 40 | H | 183 | 0.65 | 0.0 | -1.9 | ○ | ○ |

Effect of the Invention

The film of the present invention has excellent transparency, weather resistance and moist heat resistance, high surface hardness, a good hue and excellent tensile characteristics.

Industrial Applicability

The film of the present invention is useful as a film for display and decoration.

## Claims

**1.** A film comprising:

(a) 100 parts by weight of a polycarbonate resin (component a) comprising a carbonate unit (A) represented by the following formula (A) and having a specific viscosity measured with a 20°C methylene chloride solution of 0.2 to 0.5;

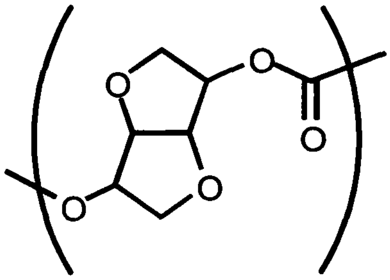

(A)

(b) 0.03 to 2.5 parts by weight of at least one ultraviolet absorbent (component b) selected from the group consisting of an ultraviolet absorbent having a benzotriazole skeleton and an ultraviolet absorbent having a triazine skeleton;
(c) 0.0001 to 0.02 part by weight of a coloring agent (component c); and
(d) 0.01 to 1 part by weight of a hindered amine-based optical stabilizer (component d),

wherein the total light transmittance of the film is not less than 80%.

**2.** The film according to claim 1, wherein the ultraviolet absorbent (component b) has a maximum absorbance ($\lambda$max) at a wavelength of 300 to 360 nm and the ultraviolet absorbent (component b) has an ultraviolet absorption rate at a wavelength of 315 nm measured by a method in this text of not less than 0.3 %.

**3.** The film according to claim 1, wherein the ultraviolet absorbent (component b) has a maximum absorbance ($\lambda$max) at a wavelength of 310 to 330 nm and the ultraviolet absorbent (component b) has an ultraviolet absorption rate at a wavelength of 315 nm measured by a method in this text of not less than 0.8 %.

**4.** The film according to claim 1, wherein the ultraviolet absorbent (component b) is 2-[4-[4,6-bis([1,1'-biphenyl]-4-yl)-1,3,5-triazin-2-yl]-3-hydroxyphenoxy]-isooctyl ester).

**5.** The film according to claim 1, wherein the ultraviolet absorbent (component b) is 2,2-methylenebis[6-(2H-benzotriazol-2-yl)-4-(1,1,3,3-tetramethylbutyl)phenol] .

**6.** The film according to claim 1, wherein the hindered amine-based optical stabilizer (component d) is a compound including a structure represented by the following formula (D) .

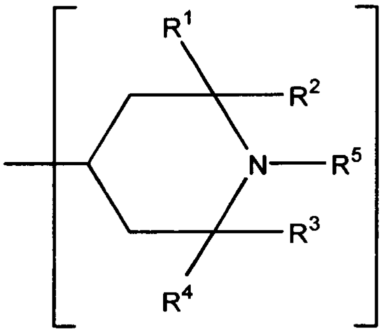

(D)

(In the formula (D), $R^1$ to $R^4$ may be the same or different and are each an aliphatic hydrocarbon group having 1 to 6 carbon atoms, and $R^5$ is a hydrogen atom or aliphatic hydrocarbon group having 1 to 6 carbon atoms.)

**7.** The film according to claim 1, wherein the polycarbonate resin (component a) further comprises a carbonate unit (B-1) derived from at least one compound selected from the group consisting of an aliphatic diol compound and an alicyclic diol compound.

**8.** The film according to claim 7, wherein the aliphatic diol compound is a linear aliphatic diol compound having 2 to 30 carbon atoms.

**9.** The film according to claim 7, wherein the alicyclic diol compound is 3,9-bis(2-hydroxy-1,1-dimethylethyl)-2,4,8,10-tetraoxaspiro(5.5)undecane.

**10.** The film according to claim 1, wherein the glass transition temperature of the polycarbonate resin (component a) is 70 to 150°C.

**11.** The film according to claim 1 which has a tensile elongation at the glass transition temperature (Tg) of not less than 100 %.

**12.** The film according to claim 1 which has a light transmittance at 315 nm of not more than 3 %.

**13.** The film according to claim 1 which has a thickness of 30 to 500 μm.

**14.** A film having an anchor coat layer, a vapor-deposited layer or a hard coat layer on at least one side of the film of claim 1.

**15.** A film for decoration including the film of any one of claims 1 to 14.

**Patentansprüche**

**1.** Film, umfassend:

(a) 100 Gewichtsteile eines Polycarbonatharzes (Komponente a), das eine durch die folgende Formel (A) dargestellte Carbonateinheit (A) umfasst und eine spezifische Viskosität, gemessen bei 20°C in Methylenchloridlösung, von 0,2 bis 0,5 hat;

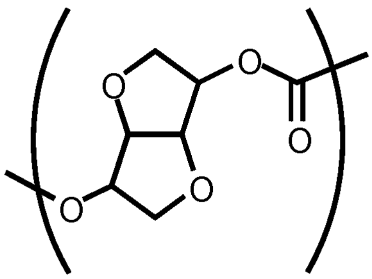

(A)

(b) 0,03 bis 2,5 Gewichtsteile wenigstens eines Ultraviolettabsorbens (Komponente b), ausgewählt aus der Gruppe, bestehend aus einem Ultraviolettabsorbens mit einem Benzotriazolgerüst und einem Ultraviolettabsorbens mit einem Triazingerüst;
(c) 0,0001 bis 0,02 Gewichtsteile eines Färbemittels (Komponente c) und
(d) 0,01 bis 1 Gewichtsteil eines optischen Stabilisators auf der Basis von behindertem Amin (Komponente d),

wobei die Gesamtlichtdurchlässigkeit des Films nicht weniger als 80% ist.

**2.** Film nach Anspruch 1, wobei das Ultraviolettabsorbens (Komponente b) einen maximalen Absorptionsgrad (λmax) bei einer Wellenlänge von 300 bis 600 nm hat und das Ultraviolettabsorbens (Komponente b) eine Ultraviolettabsorptionsrate bei einer Wellenlänge von 315 nm, gemessen durch ein Verfahren in diesem Text, von nicht weniger als 0,3% hat.

**3.** Film nach Anspruch 1, wobei das Ultraviolettabsorbens (Komponente b) einen maximalen Absorptionsgrad (λmax) bei einer Wellenlänge von 310 bis 330 nm hat und das Ultraviolettabsorbens (Komponente b) eine Ultraviolettabsorptionsrate bei einer Wellenlänge von 315 nm, gemessen durch ein Verfahren in diesem Text, von nicht weniger als 0,8% hat.

**4.** Film gemäß Anspruch 1, wobei das Ultraviolettabsorbens (Komponente b) 2-[4-[4,6-Bis([1,1'-biphenyl]-4-yl)-1,3,5-triazin-2-yl]-3-hydroxyphenoxy]-isooctylester) ist.

**5.** Film gemäß Anspruch 1, wobei das Ultraviolettabsorbens (Komponente b) 2,2-Methylenbis[6-(2H-benzotriazol-2-yl)-4-(1,1,3,3-tetramethylbutyl)phenol] ist.

**6.** Film gemäß Anspruch 1, wobei der optische Stabilisator auf Basis eines behinderten Amins (Komponente d) eine Verbindung ist, die eine durch die folgende Formel (D) dargestellte Struktur umfasst.

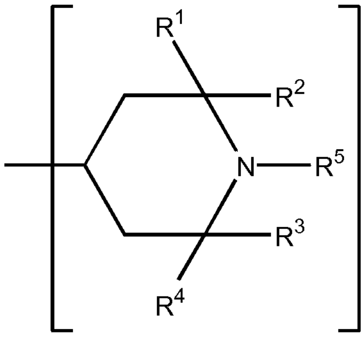

(D)

In der Formel (D) können $R^1$ bis $R^4$ gleich oder unterschiedlich sein und sind jeweils eine aliphatische Kohlenwasserstoffgruppe mit 1 bis 6 Kohlenstoffatomen und ist $R^5$ ein Wasserstoffatom oder eine aliphatische Kohlenwasserstoffgruppe mit 1 bis 6 Kohlenstoffatomen.

**7.** Film gemäß Anspruch 1, wobei das Polycarbonatharz (Komponente a) außerdem eine Carbonateinheit (B-1) umfasst, die von wenigstens einer Verbindung, ausgewählt aus der Gruppe, bestehend aus einer aliphatischen Diolverbindung und einer alicyclischen Diolverbindung, abgeleitet ist.

**8.** Film gemäß Anspruch 7, wobei die aliphatische Diolverbindung eine lineare aliphatische Diolverbindung mit 2 bis 30 Kohlenstoffatomen ist.

**9.** Film gemäß Anspruch 7, wobei die alicyclische Diolverbindung 3,9-Bis(2-hydroxy-1,1-dimethylethyl)-2,4,8,10-tetraoxaspiro(5.5)undecan ist.

**10.** Film gemäß Anspruch 1, wobei die Glasübergangstemperatur des Polycarbonatharzes (Komponente a) 70 bis 150°C ist.

**11.** Film gemäß Anspruch 1, der eine Zugdehnung bei der Glasübergangstemperatur (Tg) von nicht weniger als 100% hat.

**12.** Film gemäß Anspruch 1, der eine Lichtdurchlässigkeit bei 350 nm von nicht mehr als 3% hat.

**13.** Film gemäß Anspruch 1, der eine Dicke von 30 bis 500 μm hat.

**14.** Film, der eine Grundschicht, eine dampfabgeschiedene Schicht oder eine harte Überzugsschicht an wenigstens einer Seite des Films gemäß Anspruch 1 hat.

**15.** Film zur Dekoration, der den Film gemäß einem der Ansprüche 1 bis 14 umfasst.

## Revendications

**1.** Film comprenant :

(a) 100 parties en poids d'une résine de polycarbonate (composant a) comprenant un motif carbonate (A) représenté par la formule (A) suivante et ayant une viscosité spécifique mesurée avec une solution de chlorure de méthylène à 20 °C de 0,2 à 0,5 ;

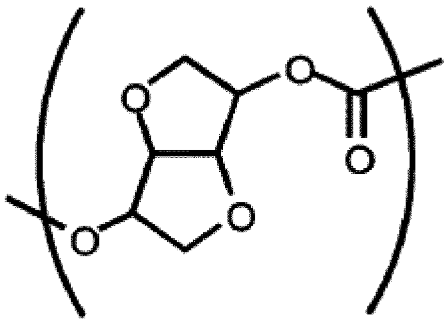

(A)

(b) 0,03 à 2,5 parties en poids d'au moins un absorbant d'ultraviolet (composant b) sélectionné dans le groupe constitué d'un absorbant d'ultraviolet ayant un squelette benzotriazole et d'un absorbant d'ultraviolet ayant un squelette triazine ;
(c) 0,0001 à 0,02 partie en poids d'un agent colorant (composant c) ; et
(d) 0,01 à 1 partie en poids d'un stabilisateur optique à base d'amine encombrée (composant d),

dans lequel le facteur de transmission de lumière total du film n'est pas inférieur à 80 %.

2. Film selon la revendication 1, dans lequel l'absorbant d'ultraviolet (composant b) présente une absorbance maximale (λmax) à une longueur d'onde de 300 à 360 nm et l'absorbant d'ultraviolet (composant b) présente un taux d'absorption d'ultraviolet à une longueur d'onde de 315 nm mesuré par un procédé de ce texte de pas moins de 0,3 %.

3. Film selon la revendication 1, dans lequel l'absorbant d'ultraviolet (composant b) présente une absorbance maximale (λmax) à une longueur d'onde de 310 à 330 nm et l'absorbant d'ultraviolet (composant b) présente un taux d'absorption d'ultraviolet à une longueur d'onde de 315 nm mesuré par un procédé de ce texte de pas moins de 0,8 %.

4. Film selon la revendication 1, dans lequel l'absorbant d'ultraviolet (composant b) est un 2-[4-[4,6-bis([1,1'-biphényl]-4-yl)-1,3,5-triazin-2-yl]-3-hydroxyphénoxy]-isooctyle ester).

5. Film selon la revendication 1, dans lequel l'absorbant d'ultraviolet (composant b) est le 2,2-méthylénebis[6-(2H-benzotriazol-2-yl)-4-(1,1,3,3-tétraméthylbutyl)phénol].

6. Film selon la revendication 1, dans lequel le stabilisateur optique à base d'amine encombrée (composant d) est un composé incluant une structure représentée par la formule (D) suivante.

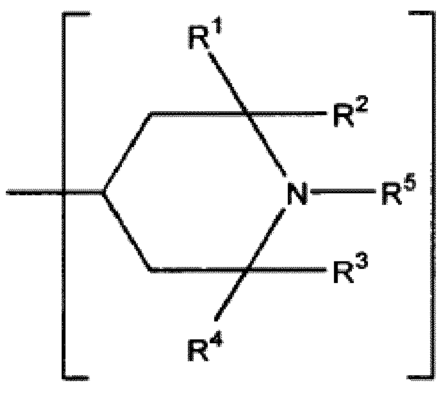

(D)

(Dans la formule (D), $R^1$ à $R^4$ peuvent être identiques ou différents et sont chacun un groupe hydrocarboné aliphatique ayant 1 à 6 atomes de carbone, et $R^5$ est un atome d'hydrogène ou un groupe hydrocarboné aliphatique ayant 1 à 6 atomes de carbone.)

7. Film selon la revendication 1, dans lequel la résine de polycarbonate (composant a) comprend en outre un motif carbonate (B-1) dérivé d'au moins un composé sélectionné dans le groupe constitué d'un composé de diol aliphatique et d'un composé de diol alicyclique.

**8.** Film selon la revendication 7, dans lequel le composé de diol aliphatique est un composé de diol aliphatique linéaire ayant 2 à 30 atomes de carbone.

**9.** Film selon la revendication 7, dans lequel le composé de diol alicyclique est le 3,9-bis(2-hydroxy-1,1-diméthyléthyl)-2,4,8,10-tétra-oxaspiro(5.5)undécane.

**10.** Film selon la revendication 1, dans lequel la température de transition vitreuse de la résine de polycarbonate (composant a) est de 70 à 150 °C.

**11.** Film selon la revendication 1 qui présente un allongement à la traction à la température de transition vitreuse (Tg) de pas moins de 100 %.

**12.** Film selon la revendication 1 qui présente un facteur de transmission de lumière à 315 nm de pas plus de 3 %.

**13.** Film selon la revendication 1 qui présente une épaisseur de 30 à 500 $\mu$m.

**14.** Film ayant une couche de revêtement d'ancrage, une couche déposée en phase vapeur ou une couche de revêtement dur sur au moins une face du film selon la revendication 1.

**15.** Film pour décoration incluant le film selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004111106 A
- JP 2008024919 A
- JP 2009079190 A
- JP 2009061762 A
- WO 201121720 A
- JP 2012214665 A
- JP 2012072392 A
- US 2012184651 A1
- WO 2011021720 A